# FASCICULE DE BREVET EUROPEEN

(11) **EP 3 268 638 B1**
(45) Date de publication et mention de la délivrance du brevet: **21.10.2020**
(21) Numéro de dépôt: 15794181.6
(22) Date de dépôt: 12.11.2015
(51) Int. Cl.: F16H 61/4017, B60K 17/356, F16H 61/4078

(54) **DISPOSITIF DISTRIBUTEUR ET LIMITEUR DE PRESSION, NOTAMMENT POUR UN DISPOSITIF D'ASSISTANCE HYDRAULIQUE SUR VÉHICULE ET VÉHICULE AINSI ÉQUIPÉ**
VERTEILERVORRICHTUNG UND DRUCKBEGRENZER, INSBESONDERE FÜR EINE HYDRAULISCHE STÜTZVORRICHTUNG AUF EINEM FAHRZEUG UND FAHRZEUG DAMIT
DISTRIBUTOR DEVICE AND PRESSURE LIMITER, IN PARTICULAR FOR A HYDRAULIC ASSISTANCE DEVICE ON A VEHICLE AND VEHICLE PROVIDED WITH SAME

(30) Priorité: 13.03.2015 FR 1500495; 10.06.2015 FR 1555295
(43) Date de publication de la demande: 17.01.2018
(73) Titulaire: Poclain Hydraulics Industrie, 60410 Verberie (FR)
(72) Inventeur: BOZIC, Ante, F-60410 Verberie (FR); CLAPIT, Bastien, F-60410 Verberie (FR); LAMBEY, Julien, F-60410 Verberie (FR)
(74) Mandataire: Regimbeau
(86) Numéro de dépôt international: PCT/EP2015/076491
(87) Numéro de publication internationale: WO 2016/146211

(56) Documents cités:
- EP-A1- 0 059 485
- US-A- 2 961 829
- US-A- 4 696 162
- US-A1- 2005 097 887

## Description

### DOMAINE TECHNIQUE GENERAL

L'invention concerne la gestion des surpressions dans des circuits hydrauliques, et plus particulièrement les dispositifs de type « limiteur de pression » ou « soupape de protection ».

L'invention s'applique notamment aux circuits d'assistance hydraulique pour véhicule.

L'invention appartient ainsi au domaine des assistances hydrauliques sur véhicule et en particulier l'engagement et le désengagement de ces assistances.

Les assistances hydrauliques temporaires sont effectuées à l'aide de machines hydrauliques qui peuvent fournir du couple aux roues non motorisées mécaniquement. Ces machines transforment l'énergie hydraulique d'une huile sous pression en une énergie mécanique, ou inversement.

On définit deux phases d'utilisation : la phase d'assistance qui permet d'apporter un gain de motricité/couple et une phase de roue libre. Entre ces deux phases se trouvent deux phases transitoires permettant d'engager ou de dégager l'assistance hydraulique.

Pour activer de telles assistances, les circuits hydrauliques sont mis sous pression grâce à une pompe de gavage. Cette pression sert notamment à engager les moteurs.

### ETAT DE L'ART

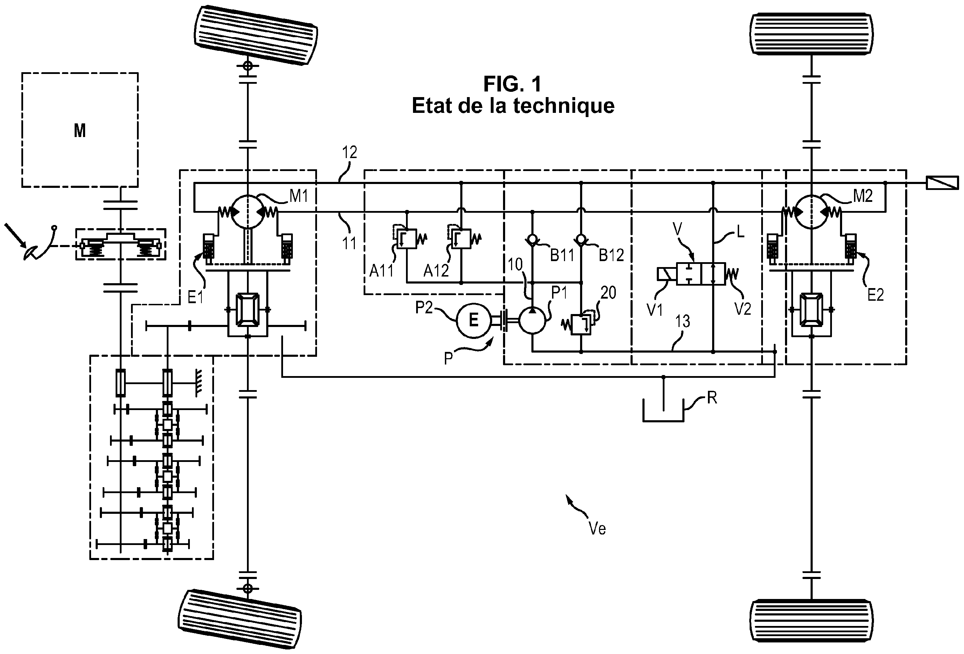

La figure 1 représente un schéma hydraulique de l'art antérieur.

Sur un véhicule Ve, une première machine hydraulique M1 est montée sur un premier essieu, par exemple l'essieu avant, et une deuxième machine hydraulique M2 est montée sur un deuxième essieu, par exemple l'essieu arrière. Par machines, on signifie qu'elles peuvent fonctionner en moteur ou en pompe.

La configuration présentée correspond à une « chaîne à vélo » (document FR 2 996 176), c'est-à-dire qu'en utilisation principale la première machine M1 fait office de pompe pour la deuxième machine M2 qui fait office de moteur.

Le véhicule comprend généralement un moteur thermique M qui entraine la première machine hydraulique M1.

A cette fin, le refoulement de la première machine M1 est relié à l'admission de la deuxième machine M2 par une ligne 11 dite haute pression et le refoulement de la deuxième machine M2 est relié à l'admission de la première machine M1 par une ligne 12 dite basse pression.

Les termes de haute et basse pression correspondent à une utilisation en marche avant avec apport de couple (« utilisation principale »).

Par conséquent, comme les pressions peuvent s'inverser, les termes de première ligne 11 et de deuxième ligne 12 seront préférés.

Un groupe électro-pompe P, comportant notamment une pompe de gavage P1 et un moteur électrique P2, est prévu pour le gavage des lignes 11, 12.

A titre d'exemple, la pompe de gavage P1 peut aussi être entrainée par d'autres éléments, tel qu'un essieu ou un moteur thermique M.

Un limiteur de pression 20 est placé en dérivation de la pompe P1 pour la protéger d'éventuelles surpressions.

La pompe de gavage P1 alimente par une ligne de gavage 10 les première et deuxième lignes 11, 12, *via* deux clapets anti-retour B11, B12 qui empêchent l'huile d'être refoulée vers la pompe P1 lorsque la pression de gavage est inférieure aux pressions d'utilisation.

L'huile provient d'une ligne de drainage 13 qui est reliée à un ou plusieurs réservoirs R.

La première et la deuxième ligne 11, 12 fonctionnent en circuit fermé et peuvent être sujettes à des surpressions pouvant endommager les machines M1, M2 ou les joints présents sur le circuit.

A titre d'exemple, les pressions sont de l'ordre de 400 bars dans une ligne et de quelques dizaines de bars dans l'autre ligne, à tout le moins une pression de gavage.

D'une façon classique, deux limiteurs de pression A11, A12 protègent les première et deuxième lignes 11, 12 des surpressions en déversant de l'huile dans la ligne de gavage 10.

Le circuit hydraulique présente aussi une valve de mise à vide V située sur une ligne de mise à vide L.

La ligne de mise à vide relie la première ou la deuxième ligne 11, 12 (on peut éventuellement mettre un sélecteur entre les lignes 11 et 12) à la ligne de drainage 13 qui conduit au réservoir R.

La valve V est une valve 2/2, comprenant une entrée et une sortie. L'entrée est reliée à la ligne 12 et la sortie à la ligne de drainage 13. La valve V possède un état passant et un état bloquant.

Le changement vers un état bloquant se fait à l'aide d'un tiroir solénoïde V1 qui est piloté électriquement. Ce changement d'état provoque une première phase transitoire en permettant l'activation effective de l'assistance hydraulique puisque les lignes haute et basse pression 11, 12 ne sont alors plus reliées au réservoir R et peuvent monter en pression. Cette montée en pression permet d'enclencher les coupleurs E1 et E2, qui lient les composants des machines hydrauliques M1 et M2 aux arbres de sortie des dites machines, de manière à les rendre actives sur le véhicule, c'est-à-dire d'engager le système. Ces coupleurs peuvent être du type embrayages à disques ou à crabot, par exemple du même type que l'état de l'art de boite de vitesse. Ils peuvent aussi représenter le couplage de moteurs à pistons radiaux qui se désengagent de leur came par rétractation des pistons.

Inversement, un ressort V2 maintient en position de repos la valve V en un état passant. Dès lors que le tiroir V1 n'est plus piloté, la valve V reprend une position passante et provoque une deuxième phase transitoire, dans laquelle la pression dans la ligne basse pression chute, dégageant ainsi l'assistance hydraulique.

On connait également une alternative simplifiée du mode de réalisation représenté sur la figure 1 avec une valve qui en position de repos ouvre la ligne de mise à vide L et bloque la ligne de gavage 10 et inversement en position pilotée.

Ainsi, selon l'art antérieur, pour les deux étapes transitoires précitées, il faut intervenir électroniquement sur plusieurs éléments, et notamment les valves V et la pompe de gavage, ce qui impose des contraintes structurelles et de réseaux électriques.

Comme indiqué précédemment, il est prévu des moyens limiteurs de pression A11, A12 destinés à protéger les première et deuxième lignes 11, 12 des surpressions puisque ces lignes 11, 12 fonctionnent en circuit fermé et peuvent être sinon sujettes à des surpressions susceptibles d'endommager les machines M1, M2 ou les joints présents sur le circuit.

La figure 2 représente une première variante de l'état de l'art : un premier limiteur de pression 21 est disposé entre la première ligne 11 et la ligne de gavage 10, et un deuxième limiteur de pression 22 est disposé entre la deuxième ligne 12 et la ligne de gavage 10.
Chaque limiteur 21, 22 peut être taré à la valeur souhaitée.

Cette solution utilise deux organes de protection (les limiteurs de pression 21, 22).

La figure 3 représente une deuxième variante de l'état de l'art : deux limiteurs de pression 23, 24 sont disposés entre les première et deuxième lignes 11, 12. Une ligne étant toujours en pression moindre, elle pourra supporter la surpression présente dans l'autre.

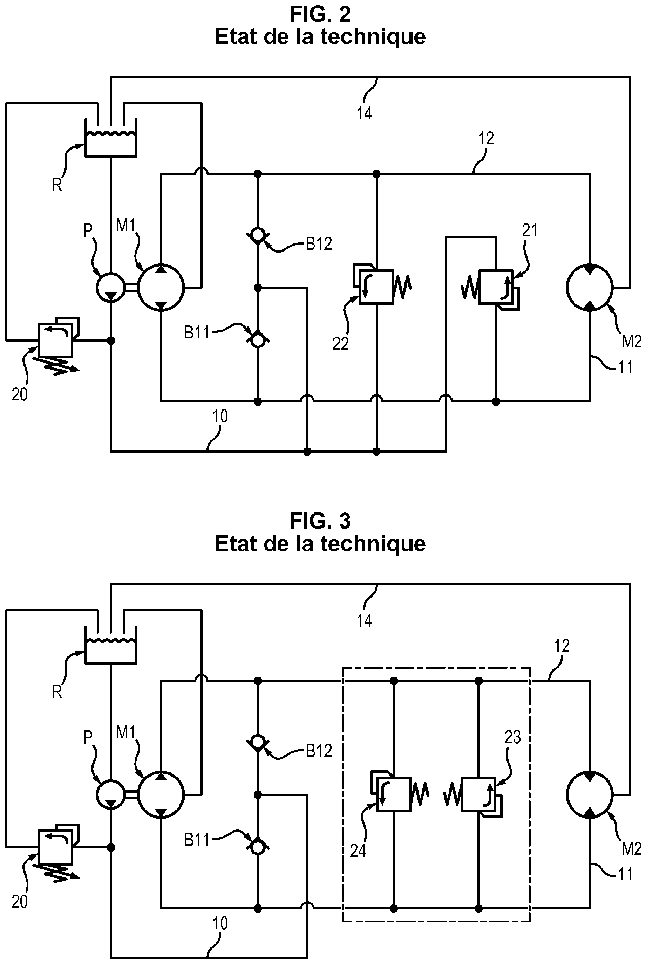

Cette solution utilise elle aussi deux organes de protection (les limiteurs de pression 23, 24). On retrouve également sur la figure 3 deux clapets anti-retour B11, B12 qui servent au gavage.

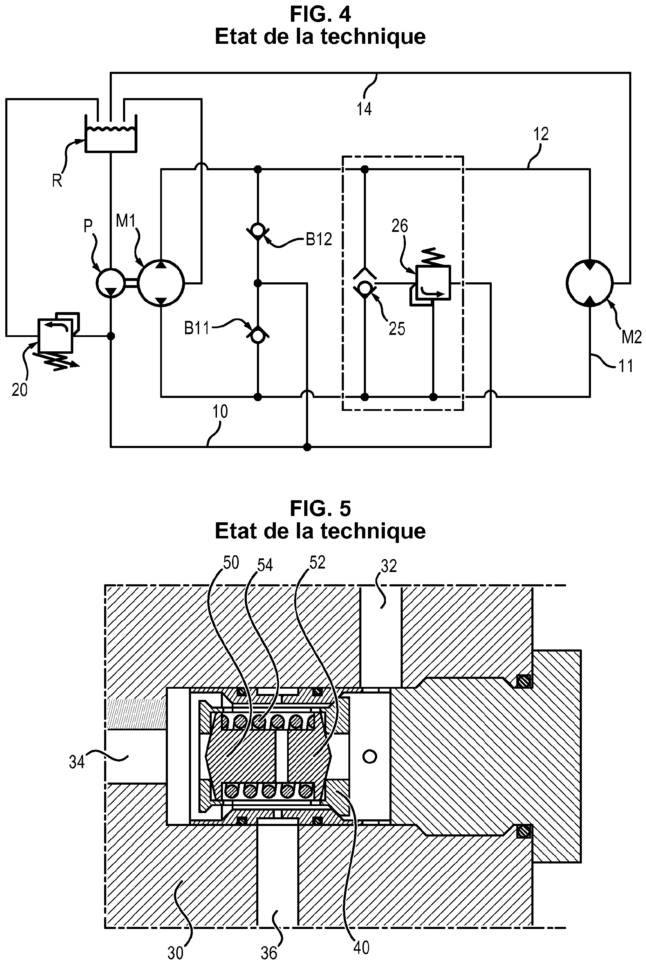

La figure 4 représente une troisième variante de l'état de l'art : un sélecteur haute-pression 25 sélectionne la ligne de plus haute pression entre la première et la deuxième ligne 11, 12 et l'envoie vers la ligne de gavage 10 *via* un limiteur de pression 26. De cette façon, on supprime un limiteur de pression, mais il faut ajouter un sélecteur de circuit 25.

Cette solution utilise elle aussi deux organes de protection. On retrouve également sur la figure 4 deux clapets anti-retour B11, B12 qui servent au gavage.

Pour optimiser l'espace disponible et diminuer les coûts de fabrication, il est recherché des organes plus simples effectuant les mêmes fonctions.

On a proposé une tentative de solution dans le document US 2005/0097887 telle qu'illustrée sur la figure 5 annexée.

Cette solution consiste à regrouper l'ensemble des fonctions formant sélecteur et limiteur de pression dans une cartouche commune.

Plus précisément sur la figure 5 annexée on a référencé 30 le corps de la cartouche définissant trois passages 32, 34 et 36 destinés à communiquer respectivement avec les lignes 11, 12 et 10 précitées, on a référencé 40 un sélecteur en forme de cage mobile à translation dans le corps 30 sous l'effet de la différence de pression entre les passages 32 et 34, et on a référencé 50 et 52 les obturateurs de deux clapets de limitation de pression associés à un ressort intercalé 54 et montés à translation à l'intérieur du sélecteur 40. Lorsque la pression appliquée sur l'un des passages 32, 34 dépasse un seuil défini par le tarage du ressort 54, l'obturateur correspondant 50 ou 52 s'écarte de son siège et permet ainsi de limiter la pression.

La Demanderesse a en particulier identifié que dans le dispositif du type décrit dans le document US 2005/0097887 et illustré sur la figure 5 annexée, il existe un risque de blocage des obturateurs des clapets de limitation de pression, lorsque par défaut de guidage les obturateurs se placent en position oblique par rapport à leur direction de translation théorique.

Le dispositif décrit dans le document US 2005/0097887 n'a pas connu un développement industriel important. Ceci semble dû à sa complexité de conception, de montage et de fonctionnement.

### PRESENTATION DE L'INVENTION

Dans le contexte précité le premier objectif de la présente invention est de proposer des moyens qui améliorent l'état de la technique, notamment en proposant des moyens de conception simple et qui améliorent les performances.

L'objectif est atteint selon l'invention grâce à un dispositif distributeur et limiteur de pression adapté pour être installé dans un système comprenant une première ligne et une deuxième ligne d'alimentation pouvant comprendre de l'huile sous pression et comprenant une ligne d'évacuation et/ou gavage, le dispositif comprenant des moyens formant sélecteur de pression adapté pour relier la ligne d'alimentation de plus basse pression à la ligne d'évacuation et/ou gavage et des limiteurs de pression Formant deux clapets associés respectivement à l'une des deux lignes d'alimentation et adaptés pour s'ouvrir en cas de surpression au-dessus d'un seuil prédéterminé sur la ligne d'alimentation associée afin de décharger la surpression correspondante vers la ligne d'évacuation et/ou gavage ou l'autre ligne d'alimentation, le sélecteur de pression et les limiteurs de pression étant formés par une seule valve, le dispositif étant caractérisé en ce que les deux clapets comprennent un obturateur commun qui coopère avec un siège unique.

La limitation de pression se fait dorénavant selon l'invention à l'aide d'un seul dispositif, ce qui améliore la compacité du système ainsi que son coût de fabrication.

Selon une autre caractéristique avantageuse de l'invention, l'obturateur possède au moins deux surfaces situées de part et d'autre du siège associé et soumises respectivement aux pressions venant des deux lignes d'alimentation.

Selon une autre caractéristique avantageuse de l'invention, le dispositif comprend des moyens de confinement adaptés pour appliquer la pression venant d'une ligne d'alimentation sur une zone localisée limitée de l'obturateur.

Selon une autre caractéristique avantageuse de l'invention, le dispositif comprend deux guidages en translation de l'obturateur, séparés selon la direction longitudinale de translation de celui-ci, d'une distance égale à au moins une fois le diamètre de l'obturateur reposant sur le siège associé, de préférence une distance égale à au moins deux fois ce diamètre et très avantageusement égale à au moins cinq fois ce diamètre.

Selon une autre caractéristique avantageuse de l'invention, le dispositif comprend un premier guidage en translation de l'obturateur formé par la coopération définie entre l'obturateur et son siège associé et au moins un deuxième guidage formé par une extrémité d'une tige d'obturateur guidé sur le corps, par exemple une surface évasée soumise à la pression d'une ligne d'alimentation ou un moyen d'appui d'un ressort de sollicitation.

Selon une autre caractéristique avantageuse de l'invention les deux clapets limiteur de pression comprennent une tige support commune qui travaille à la traction ou à la compression sous la sollicitation d'au moins un ressort définissant un tarage qui correspond audit seuil prédéterminé.

Selon une autre caractéristique avantageuse de l'invention le sélecteur de pression entre les première et deuxième lignes est adapté pour sélectionner la ligne de plus basse pression entre les première et deuxième lignes, de sorte que l'huile puisse circuler en sens inverse du fonctionnement en gavage et se décompresser dans le réservoir à travers la ligne de gavage et la pompe de gavage, avantageusement aspirée dans la ligne de plus basse pression et refoulée vers le réservoir grâce à ladite pompe.

Selon une autre caractéristique avantageuse de l'invention des limiteurs de pression sont disposés en parallèle du sélecteur entre la ligne de gavage et les première et deuxième lignes, de façon à protéger ces deux dernières de surpression.

Selon une autre caractéristique avantageuse de l'invention le sélecteur basse pression est un sélecteur de circuit inversé laissant toujours la ligne de plus basse pression parmi les première et deuxième lignes en communication avec la ligne de gavage.

Selon une autre caractéristique avantageuse de l'invention le sélecteur de pression comprend deux clapets anti-retour dos-à-dos comprenant chacun un élément d'étanchéité et un siège, les éléments d'étanchéité étant séparées l'un de l'autre par un moyen empêchant que les deux clapets de sélecteur ne soient fermés en même temps.

Selon une autre caractéristique avantageuse de l'invention la valve formant le sélecteur de pression et les limiteurs de pression comprend une cartouche dans laquelle peuvent coulisser en position relative un poussoir et un pion selon l'axe longitudinal X-X' de la valve, dans lequel :
- le poussoir sépare la cartouche en un premier volume alimenté par la première ligne et en un second volume alimenté par la deuxième ligne, les deux volumes pouvant communiquer entre eux par un canal interne compris dans le poussoir,
- le poussoir définit un volume annulaire avec la cartouche, le volume annulaire communiquant alternativement avec le premier ou le second volume selon la position en translation du poussoir dans la cartouche selon l'axe longitudinal,
- le pion comprend une première extrémité adaptée pour obstruer ledit canal dans une position de repos, et une deuxième extrémité au contact d'un ressort qui maintient le pion en position de repos, le pion étant mobile en translation selon l'axe longitudinal pour ouvrir ou obturer le canal interne,
   de sorte que lorsque le canal est obstrué, la position du poussoir est fonction des forces issues des pressions du premier volume et du deuxième volume s'exerçant de part et d'autre du poussoir, et la ligne de gavage est ainsi mise en communication avec la ligne qui a la plus basse pression parmi les première et deuxième lignes,
- le pion comprend une première surface débouchant dans le premier volume sur laquelle s'exerce une force issue de la pression du premier volume, et une deuxième surface débouchant dans la second volume sur laquelle s'exerce une force issue de la pression du second volume, les deux forces s'opposant toutes deux à la force du ressort,
   de sorte que lorsque les deux forces sont supérieures à celle du ressort, le pion subit une translation et ouvre ledit canal, mettant ainsi en communication les lignes haute et basse pression.

Selon une autre caractéristique avantageuse de l'invention el dispositif comprend un ressort de tarage unique.

Selon une autre caractéristique avantageuse de l'invention le sélecteur de pression est en forme de cage définissant deux sièges, caractérisé en ce que le dispositif comprend en outre au moins un moyen de réglage des moyens formant clapet de surpression, disposé sur l'extérieur d'une extrémité axiale du sélecteur de pression en forme de cage pour permettre un réglage du tarage du clapet de surpression associé.

Selon une autre caractéristique avantageuse de l'invention les moyens formant deux clapets de surpression comprennent un obturateur unique formé d'une excroissance sur une extrémité d'une tige, la tige émergeant axialement sur une extrémité du sélecteur et la tige et son obturateur associé sont sollicités vers une extrémité axiale du dispositif par un ressort intercalé sur la tige, entre une excroissance formant obturateur et une butée portée par la tige.

Selon une autre caractéristique avantageuse de l'invention la butée est réglable en position sur la longueur de la tige associée pour définir l'effort exercé par le ressort et par conséquent le tarage de la pression d'ouverture des moyens formant clapet de surpression.

La butée est fixée en position sur la tige par exemple par vissage, sertissage ou soudure.

Selon une autre caractéristique avantageuse de l'invention le sélecteur comprend un diabolo formé d'un cylindre central pourvu sur ses deux extrémités axiales d'excroissances respectives en saillie sur sa surface externe et sur sa surface interne d'une saillie définissant un siège de clapet de surpression, le cylindre et les excroissances étant formées d'au moins deux pièces initialement séparées et assemblées entre elles.

Selon une autre caractéristique avantageuse de l'invention le cylindre central du sélecteur comprend au moins un passage radial traversant.

Selon une autre caractéristique avantageuse de l'invention , le dispositif comprend un corps comportant un carter qui possède un rétrécissement formant deux sièges de sélecteur de part et d'autre d'un passage destiné à être raccordé à la ligne d'évacuation et/ou gavage, lequel rétrécissement est de préférence venu de matière sur la surface interne du carter.

Selon une autre caractéristique avantageuse de l'invention le corps de sélecteur comporte des passages traversant radialement formés sur une extrémité axiale à l'extérieur du siège de clapet limiteur de pression.

Selon une autre caractéristique avantageuse de l'invention l'extrémité axiale de l'obturateur dirigée vers le siège associé est en forme de tronc de cône.

Selon une autre caractéristique avantageuse de l'invention la surface en tronc de cône repose sur le siège.

Selon une autre caractéristique avantageuse de l'invention une partie de la surface tronconique qui est accessible sur l'intérieur de la chambre interne du sélecteur est soumise à la pression venant d'un premier passage, tandis que la partie de la surface tronconique qui est disposée sur l'extérieur du siège est soumise à la pression venant d'un deuxième passage via des passages traversant le corps de sélecteur.

Selon une autre caractéristique avantageuse de l'invention la conicité de deux parties élémentaires de la surface conique est différente pour adapter les seuils d'ouverture du clapet sous l'effet des pressions respectivement de deux passages.

Selon une autre caractéristique avantageuse de l'invention le dispositif comprend des moyens formant amortisseur au déplacement de l'obturateur commun.

Selon une autre caractéristique avantageuse de l'invention les moyens formant amortisseur au déplacement de l'obturateur commun comprennent un canal de fuite calibrée d'huile.

Selon une autre caractéristique avantageuse de l'invention les moyens formant sélecteur et les clapets de surpression sont placés dans un logement fermé par un bouchon amovible dont le retrait permet un réglage de tarage de ressort.

Selon une autre caractéristique avantageuse de l'invention les éléments constituant le sélecteur et les clapets de surpression sont placés dans le bloc d'un corps support usiné et muni de deux bouchons d'obturation.

L'invention concerne également les systèmes d'assistance et les véhicules équipés d'un dispositif de limitation de pression conforme à l'invention.

Selon une autre caractéristique avantageuse de l'invention, le système d'assistance hydraulique comprend un dispositif de distribution et de limitation tel que décrit précédemment.

Selon une autre caractéristique avantageuse de l'invention, le système d'assistance pour véhicule comprend :
- un premier appareil hydraulique et un deuxième appareil hydraulique, les deux appareils étant reliés par une première ligne et une deuxième ligne permettant l'admission ou le refoulement d'huile dans lesdits moteurs,
- une pompe de gavage, disposée entre un réservoir et une ligne de gavage, la ligne de gavage étant en communication avec au moins une desdites lignes et pouvant permettre le gavage desdites lignes par la pompe de gavage,
caractérisé en ce que la pompe est configurée pour pouvoir aspirer de l'huile dans la ligne de gavage afin de permettre la décompression desdites première et deuxième lignes.

Selon une autre caractéristique avantageuse de l'invention, le véhicule est équipé d'un dispositif de limitation de pression ou d'un système d'assistance hydraulique, tels que décrits précédemment.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un circuit hydraulique et notamment de gavage, connu de l'art antérieur,
- Les figures 2 à 4 représentent 3 variantes de circuit hydraulique connues de l'art antérieur,
- La figure 5 représente un dispositif distributeur et limiteur de pression connu de l'art antérieur, plus précisément du document US 2005/0097887,

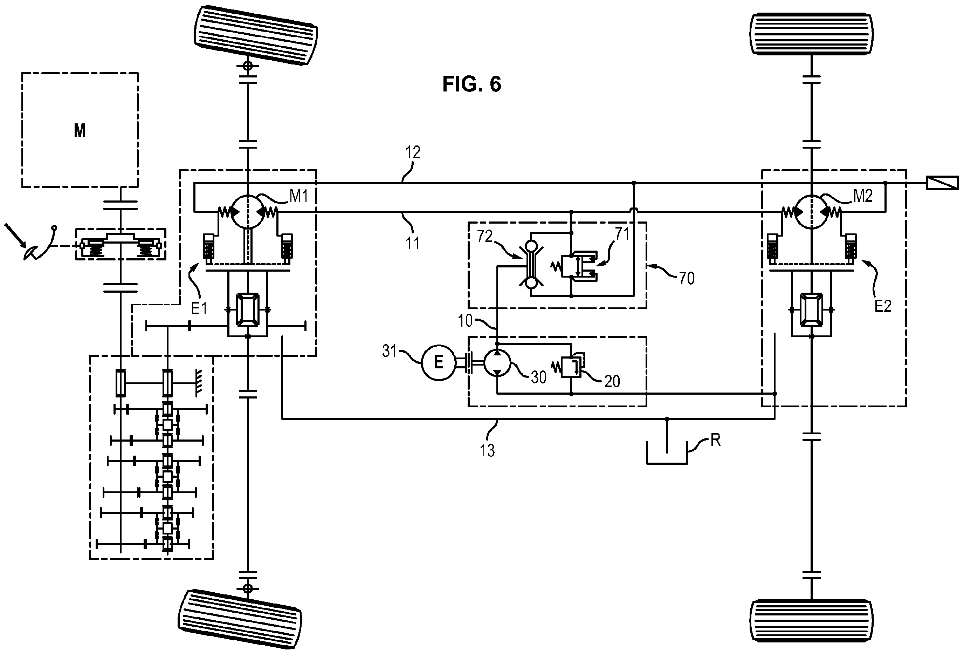

- La figure 6 représente un mode de réalisation d'un circuit hydraulique d'assistance conforme à l'invention,

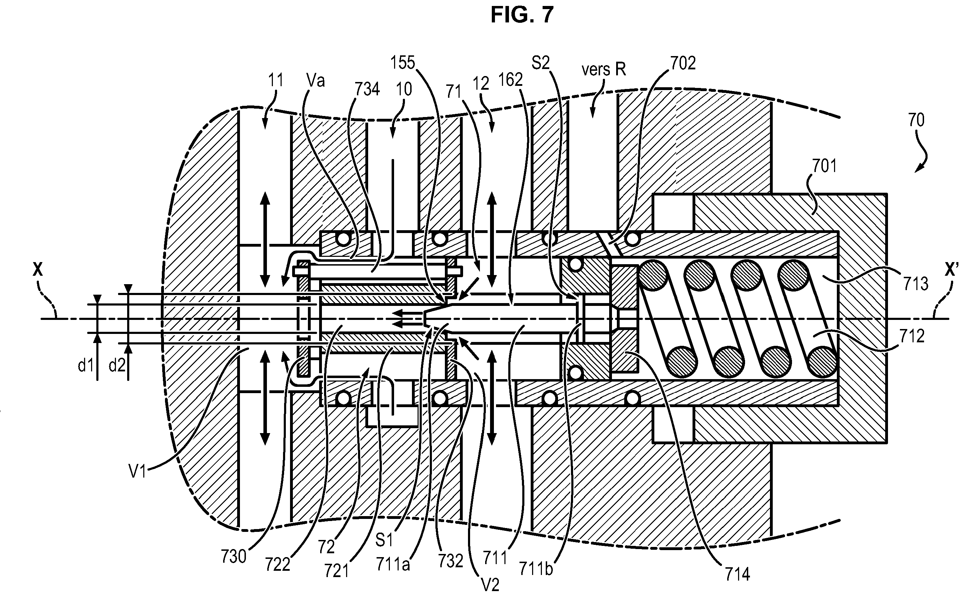

- La figure 7 représente une valve conforme à l'invention formant dispositif distributeur et limiteur de pression permettant la mise en œuvre du circuit de la figure 6,

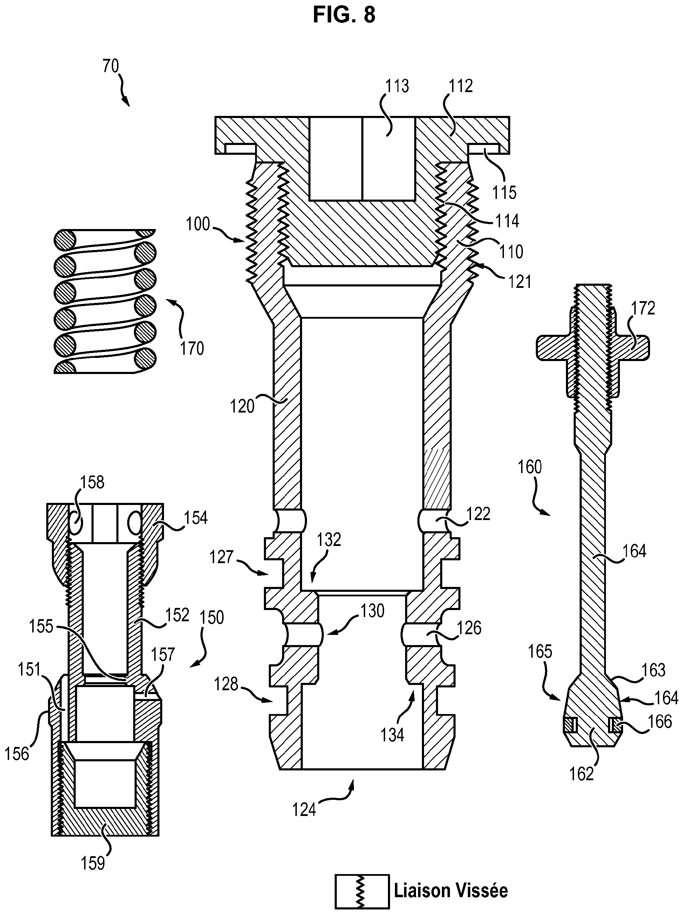

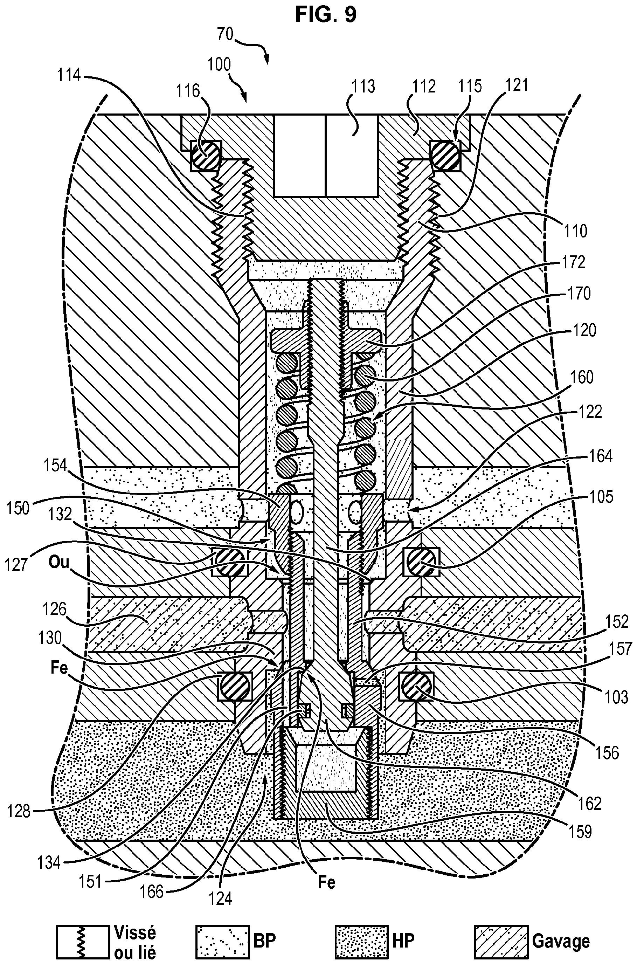

- Les figures 8 à 11 représentent une variante de réalisation d'une telle valve conforme à la présente invention formant dispositif distributeur et limiteur de pression, plus précisément la figure 8 présente selon une vue en coupe axiale les différentes pièces composant cette valve, tandis que les figures 9 à 11 présentent la même valve dans 3 états de fonctionnement dépendant des pressions régnant dans les lignes d'alimentation,

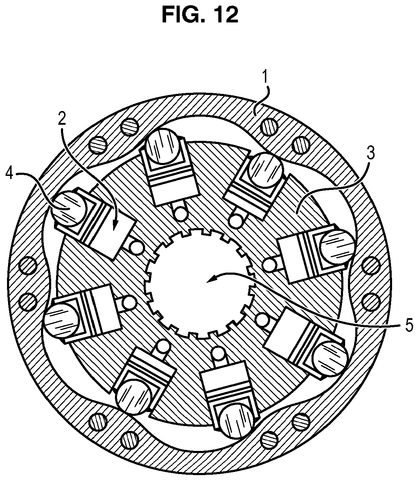

- La figure 12 représente un schéma d'une partie d'une machine hydraulique

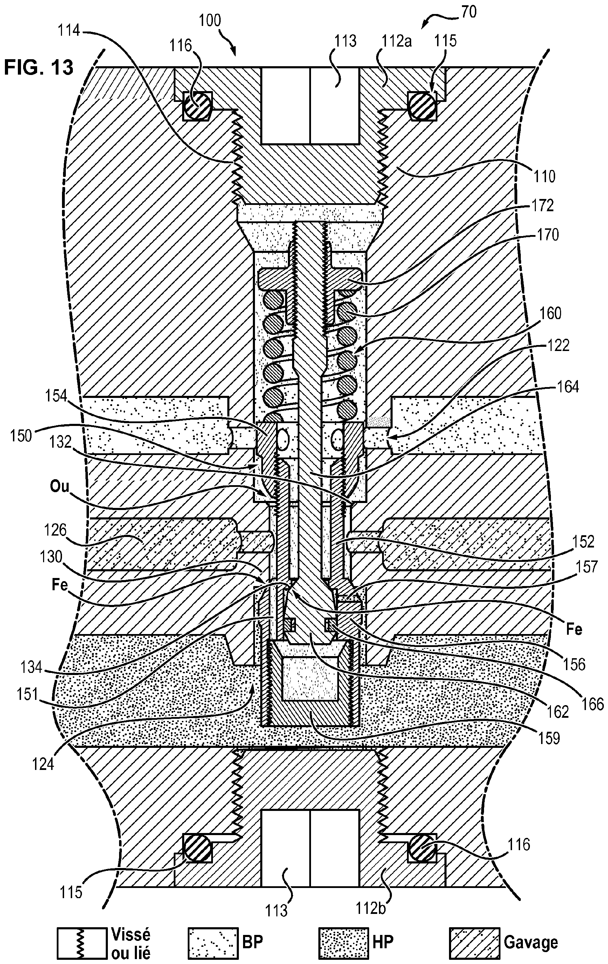

- La figure 13 présente une variante de réalisation selon laquelle le dispositif formant sélecteur et limiteur de pression est intégré dans un corps support usiné muni de deux bouchons d'obturation.

### DESCRIPTION DETAILLEE

On va maintenant décrire les modes de réalisation préférés de l'invention.

La figure 6 annexée représente l'utilisation dans un circuit d'assistance hydraulique, du dispositif distributeur et limiteur de pression 70 conforme à l'invention représenté sur la figure 7.

Le dispositif distributeur et limiteur de pression 70 représenté sur la figure 7 comprend dans un boitier de cartouche commun d'une part un sélecteur de pression 72 et d'autre part deux clapets limiteurs de pression regroupés dans un ensemble commun 71. Le sélecteur 72 et l'ensemble limiteur de pression 71 seront décrits plus en détail par la suite.

Le circuit illustré sur la figure 6 comprend deux machines hydrauliques M1, M2 en fonctionnement de chaine à vélo, comme mentionné en introduction.

Ces machines M1, M2 sont reliées entre elles par une première ligne 11 et une seconde ligne 12 qui alimentent les machines en huile.

Selon les modes de fonctionnement, le sens de circulation de l'huile et la pression dans ces lignes 11, 12 peuvent changer.

Par exemple, lorsque le véhicule équipé est en marche avant et en mode « apport de couple », la première machine M1 fait office de pompe et la deuxième machine M2 fait office de moteur. En considérant que la première ligne 11 relie le refoulement de la première machine M1 à l'admission de la deuxième machine M2 et que la deuxième ligne 12 relie le refoulement de la deuxième machine M2 à l'admission de la première machine M1, on aura dans ce cas une haute pression dans la première ligne 11 et une basse pression dans la deuxième ligne 12 et un sens de circulation de l'huile de la première machine M1 vers la deuxième M2 dans la ligne 11.

Par haute pression, on entend des pressions pouvant être supérieures à quelques centaines de bar, par exemple 400 Bars et basse pression des pressions de quelques dizaines de Bars, par exemple 3 ou 30 Bars. La basse pression se différencie de la pression des réservoirs d'huile sans pression, par exemple représentés par les carters des machines M1 et M2, et le réservoir sans pression R, sensiblement reliés à la pression atmosphérique. La pression de basse pression différente de la pression atmosphérique est d'une manière connue nécessaire pour un bon fonctionnement d'une transmission en circuit fermé.

En fonctionnement, une transmission en boucle fermé présente une ligne HP et une ligne BP. Si aucun couple n'est produit par les machines, les deux lignes sont à la pression de BP, qui est une pression minimale pour le circuit fermé en fonctionnement.

En marche arrière, le sens de circulation de l'huile s'inverse et la haute pression se trouve alors dans la deuxième ligne 12 et la basse pression dans la première ligne 11.

Similairement, lorsque le véhicule est en « retenue », par exemple en descente, les pressions peuvent aussi changer selon les lignes 11, 12.

Ces machines M1, M2 sont embrayées, c'est-à-dire engagées, grâce à des coupleurs E1, E2 alimentés hydrauliquement par les première et deuxième lignes 11, 12. Les coupleurs E1, E2 représentés relient les blocs moteurs des machines hydrauliques aux arbres qui les traversent, et rendent les machines actives.

Un circuit de gavage est prévu pour alimenter les lignes 11, 12 en huile afin de permettre l'engagement des machines M1, M2 et aussi de compenser les fuites d'huile. Ce circuit permet de maintenir les lignes auxquelles il est raccordé à la pression minimale basse pression, dénommée pression de gavage. Les lignes 11 et 12 sont donc ainsi toujours au moins à la pression de gavage quand le système est activé.

Pour cela, une pompe de gavage 30, qui sera appelée « pompe 30 » est prévue. Elle est reliée à un réservoir R par une ligne de drainage 13 et peut alimenter les première et deuxième lignes 11, 12 *via* notamment une ligne de gavage 10.

La pompe de gavage 30 peut délivrer une huile sous une pression de quelques dizaines de bars, sensiblement équivalente à la basse pression.

La mise en pression des lignes HP et BP de la boucle fermée, par le circuit de gavage, permet l'activation des machines hydrauliques M1 et M2, via l'actionnement des coupleurs E1 et E2. Inversement, la sortie d'huile de la boucle fermée, induit une baisse de pression dans les lignes, qui relâche les coupleurs E1 et E2 et libère les machines M1 et M2, ce qui les rend inactives.

Selon une caractéristique préférentielle de l'invention, la pompe 30 est configurée pour pouvoir aspirer de l'huile depuis la ligne de gavage 10 et notamment la refouler vers le réservoir R via la ligne de drainage 13.

La mise à vide se fait ainsi par inversion du sens de fonctionnement de la pompe 31 et il n'y a plus besoin de valve de mise à vide ni de ligne spécifique de mise à vide.

Pour cela, les première et deuxième lignes 11, 12 ne comprennent plus chacune un clapet anti-retour autonome B11, B12 comme auparavant. En effet, l'aspiration dans la ligne de gavage 10 conduirait au verrouillage de ces clapets anti-retour, ce qui empêcherait l'huile de rejoindre la ligne de gavage 10.

Lorsque l'assistance hydraulique est requise, le dispositif fonctionne classiquement, avec une activation de la pompe 30 pour injecter de l'huile dans la ligne de gavage 10 qui va ensuite mettre sous pression les première et deuxième lignes 11, 12 et le cas échéant les coupleurs E1, E2 pour l'engagement des machines M1, M2.

En revanche, lorsque l'assistance hydraulique n'est plus requise, la pompe 30 inverse son sens de fonctionnement, c'est-à-dire qu'au lieu de prélever de l'huile dans le réservoir R pour l'injecter dans la ligne de gavage 10, elle prélève l'huile dans les première et/ou deuxième lignes 11, 12 *via* la ligne de gavage 10 et l'envoie vers le réservoir R. Ainsi, les première et deuxième lignes 11, 12 sont décompressées et le désengagement des machines M1, M2 est effectué grâce à l'aspiration par la pompe 30 du volume d'huile nécessaire.

Le désengagement est effectué rapidement grâce à l'aspiration de la pompe 30 qui est considérée comme plus efficace qu'une simple mise à vide par ouverture d'une valve de mise à vide.

Selon les architectures, seule la ligne correspondant à celle en basse pression en marche avant et en apport de couple, parmi les deux lignes 11, 12, est reliée à la ligne de gavage 10.

Plus précisément, la mise à vide produit des cavitations dans les cylindres des machines hydrauliques M1, M2. La décompression de la ligne de plus basse pression crée des volumes morts sous les pistons et du fait de la rotation des machines M1, M2, les espaces morts sont remplis par la ligne haute pression, ce qui permet la mise à vide de la ligne de plus haute pression aussi. Lorsque les machines M1 et M2 tournent, l'une d'elles va prélever de l'huile dans la ligne à plus haute pression, vers la ligne basse pression, ou elle sera aspirée via le clapet. La ligne basse pression étant vidée de par ailleurs, la pression va donc baisser dans les deux lignes 11 et 12 en même temps. Ainsi, les dispositions précitées permettent sur ce circuit particulier, de faire baisser la pression dans les deux lignes, même si une seule est reliée directement à la pompe. L'expression «reliée directement » doit être comprise comme signifiant « sans passer à travers une autre machine hydraulique » ou « raccordé par un clapet ouvert à la ligne allant en direction de la pompe de gavage ».

C'est un processus de cavitation volontaire, provoqué notamment par l'aspiration de la pompe 30, qui accélère la mise à vide.

On passe ainsi d'une mise à vide passive (arrêt de commande de la pompe et de la valve de mise à vide) à une mise à vide active, tout en supprimant une valve (la valve de mise en vide) et supprimant matériellement une ligne (la ligne de mise à vide présente dans l'art antérieur).

De préférence, la pompe 30 est alimentée par un groupe électrique 31, formant un groupe électro-pompe GEP. Un limiteur de pression 20 est disposé en parallèle de la pompe 30, d'une façon classique.

L'inversion du sens de rotation du moteur électrique 31 fait fonctionner la pompe 30 en sens inverse. La vitesse et la durée d'activation sont fonction du volume d'huile à aspirer et des caractéristiques du dispositif, telles que la cylindrée.

Il est ainsi nécessaire de disposer d'un GEP 30, 31 pouvant fonctionner dans les deux sens de rotation.

Selon l'invention la ligne de gavage 10 est reliée aux première et deuxième lignes 11, 12 par un sélecteur basse pression 72 (en terminologie anglo-saxonne « *inverse shuttle valve* », soit « sélecteur de circuit inversé »). Cela permet de gaver la ligne 11 ou 12 qui a toujours la pression la plus basse (lorsque le véhicule est en marche arrière ou en retenue, les pressions dans les lignes 11, 12 peuvent s'inverser).

Le sélecteur 72 laisse ouverte en permanence la ligne de plus basse pression et donc relie cette ligne de plus basse pression avec la ligne de gavage 10.

On retrouve des limiteurs de pression regroupés sous forme d'un ensemble commun référencé 71 sur la figure 6 en parallèle du sélecteur 72. L'ensemble 71 sera décrit plus en détail par la suite. Il protège les première et deuxième lignes 11, 12 de surpression éventuelle.

Le sélecteur basse pression 72 est typiquement constitué de deux clapets anti-retour, dos-à-dos, comprenant chacun un élément d'étanchéité, par exemple une bille, ou un clapet de forme adapté aux débits et aux pressions du système. L'élément d'étanchéité, par exemple une bille ou un moyen équivalent, est logé sur un siège respectif pour obturer le passage de l'huile.

Les billes ou moyens équivalents précités sont maintenus à une distance minimale l'un de l'autre par un moyen rigide, par exemple une tige, de sorte qu'un des deux clapets est en permanence ouvert. Les billes ou moyens équivalents précités peuvent aussi être solidaires du moyen rigide.

Dès qu'une pression est supérieure d'un côté, l'élément d'étanchéité précité, par exemple une bille ou moyen équivalent précité, se plaque contre le siège associé et obture la communication entre la ligne d'alimentation 11, 12 et la ligne de gavage 10, libérant ainsi l'ouverture de l'autre côté entre l'autre ligne d'alimentation 12, 11 et la ligne de gavage 10.

En outre, grâce au moyen rigide intercalé entre les deux moyens d'étanchéité obturateurs ou billes, qui maintient un des deux clapets ouvert, il n'y a pas de risque d'obturation du sélecteur 72 lorsque la pompe 30 aspire dans la ligne de gavage 10 et crée une dépression.

Les figures 6 et 7 représentent une valve 70 comprenant à la fois un limiteur de pression 71 et un sélecteur basse pression 72. Dans cette valve 70, le limiteur 71 est un double limiteur situé entre les première et deuxième lignes 11, 12.

Une surpression dans une des deux lignes 11, 12 sera évacuée par déversement d'huile dans l'autre ligne 12, 11.

La valve 70 comprend une cartouche 701 dans laquelle se trouvent un pion 711 et un poussoir 721. Ces deux derniers peuvent coulisser en translation relative selon un axe longitudinal X-X'. Plus précisément le poussoir 721 est de préférence fixe dans le corps de cartouche 701, tandis que le pion est mobile à translation dans le corps de cartouche 701

Le poussoir 721 délimite le volume de la cartouche 701 en un premier volume V1 alimenté par la première ligne 11 et en un second volume V2 alimenté par la deuxième ligne 12. Les deux volumes V1, V2 ne sont pas complètement indépendants et peuvent communiquer fluidiquement entre eux par un canal interne 722 qui est compris dans le poussoir 721.

En outre, le poussoir 721 définit avec la cartouche 701 un volume annulaire Va entre ledit poussoir 721 et la cartouche 701. Ce volume annulaire Va est toujours en communication avec la ligne de gavage 10 et est alternativement en communication avec le premier ou le second volume V1, V2. Ainsi, même lorsque la pompe de gavage 10 aspire, il n'y a pas de risque d'obturation.

Le pion 711 comprend une première extrémité 711a qui est adaptée pour obstruer le canal interne 722 dans une position de repos et pour l'ouvrir dans une position de travail. Ces deux positions s'obtiennent par une translation du pion 711 selon X-X'. Une deuxième extrémité 711b dudit pion 711 est au contact d'un ressort 712 qui maintient le pion 711 en position de repos. Dans cette position de repos, l'extrémité en cône 711a du pion 711 repose contre l'extrémité du canal interne 722 du cylindre 721 qui forme un siège 155.

Lorsque le canal interne 722 est obstrué, la position du poussoir 721 dépend des pressions s'exerçant dans les premier et deuxième volumes V1, V2 :
- Lorsque la pression dans le premier volume V1 est supérieure à celle du deuxième volume V2, le poussoir 721 met en communication la ligne de drainage 10 avec le deuxième volume V2 et donc la deuxième ligne 12,
- Lorsque la pression dans le deuxième volume V2 est supérieure à celle du volume V1, le poussoir 721 met en communication la ligne de drainage 10 avec le premier volume V1 et donc la première ligne 11. Ainsi, le poussoir 721, lorsqu'il est obstrué, a la fonction de sélecteur basse pression 72.

Le pion 711 comprend en outre une première surface S1 débouchant dans le premier volume V1 sur laquelle s'exerce une force issue de la pression du premier volume V1. En pratique, cette première surface S1 correspondant à la surface obstruant le canal interne 722. Le pion comprend similairement une deuxième surface S2 débouchant dans le second volume V2 et sur laquelle s'exerce une force issue de la pression du second volume V2. En pratique, cette surface S2 est située entre le volume V2 et un logement 713 du ressort 712.

La première surface S1 est de préférence une surface tronconique formée sur la première extrémité du pion 711 et engagée dans le canal interne 722 du poussoir 721. La seconde surface S2 est de préférence formée d'une collerette annulaire en saillie sur la périphérie du pion 711 au voisinage de la seconde extrémité 711b de celui-ci.

Les deux forces dues à la pression du fluide présent dans les lignes 11 et 12, s'exercent dans le même sens et tendent à mettre le pion 711 en position de travail, c'est-à-dire à compresser le ressort 712 et à ouvrir le canal interne 722, en éloignant le pion 711 du poussoir 722.

Ainsi, lorsque l'effort exercé sur le pion 711 par la pression de fluide est supérieur à la force du ressort 712, le canal interne 722 s'ouvre et les deux volumes V1, V2 communiquent entre eux pour permettre à la surpression d'être évacuée d'une ligne 11, 12 vers l'autre 12, 11. Le pion 711 et le ressort 712 forment le limiteur de pression 71 qui combinent deux limiteurs de pression.

L'on comprend donc que le dispositif illustré sur la figure 7 comprend des moyens formant deux clapets associés respectivement à l'une des deux lignes 11 et 12 et adaptés pour s'ouvrir en cas de surpression au-dessus d'un seuil prédéterminé sur la ligne associée afin de décharger la surpression correspondante vers la ligne d'évacuation et/ou gavage ou vers l'autre ligne d'alimentation 12 ou 11, les deux clapets comprenant un obturateur commun 711 qui coopère avec un siège unique 722.

Il est possible d'obtenir des tarages différents de pression entre le seuil de pression régnant dans le premier volume V1 qui provoque l'ouverture du clapet de surpression et le seuil de pression régnant dans le deuxième volume V2 qui provoque l'ouverture du clapet de surpression, en choisissant des surface S1, S2 adaptées. En pratique, étant donné les pressions en jeu (par exemple 400 bars dans une ligne contre 30 bars dans l'autre), seul un des deux volumes V1, V2 exerce une force significative contre le ressort 713.

Cette valve 70 qui intègre un limiteur 71 qui agit avec un seul ressort 713 et qui intègre un sélecteur de basse pression 72 permet une meilleure compacité du dispositif que les dispositifs connus de l'art antérieur.

Selon le mode de réalisation illustré sur la figure 7, le poussoir de sélecteur est formé d'un cylindre 721 fixe dans le corps de cartouche. Le sélecteur proprement dit est constitué d'un ensemble qui comprend deux obturateurs 730 et 732 relié par un élément rigide intercalé, par exemple au moins une tige 734 parallèle à l'axe X-X'. La longueur de l'élément rigide intercalé, formé par exemple d'au moins une tige 734, est supérieure à la longueur du cylindre 721. Les deux obturateurs 730 et 732 sont de préférence formés chacun d'une rondelle disposée en regard de l'une des extrémités du cylindre 721. Le diamètre externe des rondelles 730 et 732 est égal au diamètre interne de la chambre du corps qui accueille le sélecteur. Le diamètre interne des rondelles est inférieure à celui externe du cylindre 721. La rondelle obturateur 730 est soumise à la pression appliquée par la ligne 11. La rondelle obturateur 732 est soumise à la pression appliquée par la ligne 12.

Ainsi lorsque la pression dans la ligne 11 est inférieure à la pression dans la ligne 12, la rondelle 732 est plaquée contre le cylindre 721 alors que la rondelle 730 est séparée du cylindre 721. La rondelle 732 ferme le passage communiquant avec la ligne 12 comme on le voit sur la figure 7, tandis que la rondelle 730 étant séparée du cylindre 721, autorise une liaison entre la ligne 11 et la ligne de gavage 10.

Inversement lorsque la pression dans la ligne 11 est supérieure à la pression dans la ligne 12, la rondelle 730 est plaquée contre le cylindre 721 alors que la rondelle 732 est séparée du cylindre 721. La rondelle 730 ferme le passage communiquant avec la ligne 11, tandis que la rondelle 732 étant séparée du cylindre 721, autorise une liaison entre la ligne 12 et la ligne de gavage 10.

Comme on le voit à l'examen de la figure 7 annexée, l'obturateur 711 possède au moins deux surfaces S1 et S2 situées de part et d'autre du siège associé 155 formé sur le cylindre 721 et soumises respectivement aux pressions venant des deux lignes d'alimentation 11 et 12.

Par ailleurs le dispositif comprend des moyens de confinement adaptés pour appliquer la pression venant de la ligne d'alimentation 12 sur une zone localisée limitée de l'obturateur 711, au niveau de la seconde extrémité de celui-ci formant la deuxième surface de sollicitation S2. Plus précisément à ce niveau, comme on le voit sur la figure 7, la collerette qui définit la seconde surface S2 est placée dans un logement de diamètre complémentaire. Ainsi la pression qui règne dans la ligne d'alimentation 12 ne s'applique qu'à la face de cette collerette dirigée vers le siège 155.

Le dispositif illustré sur la figure 7 comprend en outre deux guidages en translation de l'obturateur, séparés selon la direction longitudinale de translation X-X' de celui-ci, d'une distance égale à au moins une fois le diamètre de l'obturateur 711 reposant sur le siège 155 associé, de préférence une distance égale à au moins deux fois ce diamètre et très avantageusement, comme illustré sur la figure 7 égale à au moins cinq fois ce diamètre.

Plus précisément encore comme illustré sur la figure 7, le dispositif comprend un premier guidage en translation de l'obturateur 711 formé par la coopération définie entre l'extrémité conique 711a de l'obturateur 711 et son siège associé 155 et au moins un deuxième guidage formé par la deuxième extrémité 711b de la tige d'obturateur 711 guidée sur le corps au niveau de la collerette précitée définissant la surface de sollicitation S2, c'est-à-dire au niveau de la surface évasée soumise à la pression de la ligne d'alimentation 12.

La présence d'un tel double guidage permet d'améliorer la fiabilité du dispositif par rapport aux dispositions proposées dans le document antérieur US 2005/0097887. En effet la présence de deux guidages séparés d'une distance au moins égale au diamètre du siège 155 et de préférence supérieure à cinq fois ce diamètre, permet d'éviter que l'obturateur ne se place en position oblique par rapport à la direction de translation recherchée X-X'.

Par ailleurs le fait de former les deux obturateurs de clapet de limitation de surpression associés respectivement aux deux lignes 11 et 12 sur un moyen commun 711, en disposant les deux surfaces de sollicitation respectivement de part et d'autre du siège 155, permet de retenir une distance de guidage importante (typiquement supérieure à 5 fois le diamètre du siège 155) sans cependant imposer un encombrement longitudinal rédhibitoire. L'on comprend en effet que si le dispositif intégrait deux obturateurs séparés respectivement pour chaque clapet de limitation de surpression, l'encombrement longitudinal cumulé des deux obturateurs serait au moins égal à 10 fois le diamètre du siège 155, si l'on souhaite assurer un guidage de chaque obturateur avec deux moyens de guidage séparés de 5 fois le diamètre du siège 155.

Selon la figure 7 annexée le ressort 712 est placé dans une chambre 713 qui communique avec le réservoir R par l'intermédiaire d'un passage traversant 702. Un disque 714 est intercalé entre l'extrémité du pion 711 et le ressort 712. La communication définie entre la chambre 713 et le réservoir R permet d'éviter une surpression dans la chambre 713 lorsque le clapet de surpression s'ouvre et que par conséquent la collerette se déplace dans son logement complémentaire formant un effet de piston.

Par ailleurs le passage 702 peut servir d'amortisseur au déplacement du clapet d'obturateur si sa section est calibrée pour freiner le transfert d'huile.

L'on comprend que la tige qui forme le pion 711 travaille à la compression sous la sollicitation du ressort 712.

On va maintenant décrire une deuxième variante de réalisation d'un dispositif distributeur et limiteur de pression conforme à la présente invention en regard des figures 8 à 11.

Les figures 8 à 11 représentent une cartouche 100 conforme à l'invention intégrant un dispositif de limitation de pression 70 conforme à l'invention qui intègre des moyens qui remplissent la fonction d'un sélecteur de pression 72 et deux limiteurs de pression regroupés dans un ensemble commun 71.

Le dispositif 70 comprend un corps 110 qui possède trois ports 122, 124, 126 : deux ports 122, 124 qui communiquent respectivement avec les lignes 11 et 12 et un port 126 qui communique avec la ligne de gavage 10.

La ligne de gavage 10 peut être alimentée en huile par la pompe de gavage 30 jusqu'à atteindre la pression de gavage, qui rend les machines M1 M2 opérationnelles, ou bien la ligne de gavage 10 peut être aspirée par la pompe de gavage, ce qui rend les machines M1 M2 non opérationnelles. Les machines M1 et M2 sont d'un type qui devient non opérationnel ou débrayable, en dessous d'un seuil de pression dans les lignes 11 et 12. Le sélecteur raccorde automatiquement la ligne à plus basse pression au gavage, ce qui permet une mise en fonction, ou une mise hors fonction de la transmission, qui sont souples et ordonnées.

Le dispositif de limitation de pression 100 représenté sur les figures 8 à 11 comprend essentiellement un corps 110 qui loge un sélecteur 150 et des moyens formant clapets de surpression 160.

Le dispositif 100 est centré sur un axe longitudinal de symétrie O-O. Le dispositif 100 est globalement symétrique de révolution autour de l'axe O-O.

Le corps 110 est formé d'une cartouche adaptée pour être intégrée dans toute structure support, par exemple sur le carter d'un moteur hydraulique.

Le corps 110 est formé de préférence par assemblage d'un carter 120 et d'un bouchon 112. Le bouchon 112 peut être fixé sur une extrémité axiale du carter 120 par tout moyen approprié, par exemple par sertissage ou de préférence par vissage au niveau de filetages complémentaires 114. Le bouchon 112 peut être équipé d'une forme 113 non cylindrique de révolution permettant son serrage, ainsi que d'une gorge 115 adaptée pour recevoir un joint d'étanchéité 116 en contact avec la structure support. L'extrémité axiale du carter 120 peut être munie sur sa surface extérieure d'un filetage 121 permettant l'assemblage du dispositif 100 sur cette structure support.

Le carter 120 comprend au moins trois passages traversant 122, 124, 126 qui correspondent aux trois ports précités.

L'un des passages traversant 126 est formé en partie médiane sur la longueur du carter 120. Plus précisément, de préférence, il est prévu plusieurs orifices 126 équi-répartis autour de l'axe O-O.

Les passages 122 et 124 sont formés respectivement de part et d'autre du passage médian 126. Plus précisément de préférence, le passage 122 est formé de plusieurs orifices 122 équi-répartis autour de l'axe O-O.

Le passage 124 peut également être formé de plusieurs orifices équi-répartis autour de l'axe O-O. Cependant, selon le mode de réalisation préférentiel, pour des raisons de fabrication et d'assemblage, le passage 124 est formé d'un orifice qui débouche axialement sur le carter 120 à l'extrémité opposée au bouchon 112.

Le carter 120 comprend de préférence sur sa surface extérieure deux gorges annulaires 127, 128, disposées entre les passages 122, 126 et 124, destinées à recevoir des joints respectifs 103, 105 en contact avec la structure support et permettant d'isoler entre elles les liaisons hydrauliques assurées vers les passages 122, 126 et 124.

Le carter 120 comprend sur sa surface interne et au niveau du passage médian 126 un rétrécissement 130 qui s'étend axialement de part et d'autre du passage 126. Le rétrécissement 130 définit respectivement sur ses deux extrémités axiales deux sièges 132, 134 associés au sélecteur 150.

Le rétrécissement 130 qui forme les deux sièges 132, 134 peut être venu de matière sur la surface interne du carter 120 ou être formé d'une pièce séparée rapportée sur la surface du carter 120 et fixée par tout moyen approprié, par exemple par vissage, sertissage ou soudure.

Les deux sièges 132, 134 sont orientés respectivement vers les extrémités axiales opposées du carter 120.

Le sélecteur 150 a la forme générale d'un diabolo formé d'un cylindre central 152 de section transversale cylindrique de révolution constante pourvu sur ses deux extrémités axiales d'excroissances respectives 154, 156 en saillie sur sa surface externe.

Les saillies 154, 156 forment respectivement deux obturateurs annulaires, dirigés respectivement vers la partie médiane du diabolo 150, adaptés pour coopérer avec les sièges 132, 134 formés sur le carter 120.

Le diamètre extérieur du cylindre central 152 est inférieur au diamètre interne du rétrécissement 130. Le diamètre extérieur des obturateurs 154, 156 en revanche est supérieur au diamètre des sièges 132, 134.

Ainsi, lorsque l'un des obturateurs 154, 156 repose sur le siège associé 132, 134, le clapet correspondant du sélecteur 150 est fermé. Inversement, lorsque un obturateur 154, 156 est séparé du siège associé 132, 134, le clapet correspondant du sélecteur 150 est ouvert.

L'utilisation d'un sélecteur 150 comprenant une cage 152 sur les extrémités de laquelle sont formés les obturateurs respectifs 154, 156 de deux clapets de sélection, permet de garantir une distance constante entre ces deux obturateurs 154, 156 et par conséquent permet de garantir que lorsque l'un des clapets de sélection est fermé, l'autre clapet de sélection est automatiquement ouvert.

Le cylindre 152 définit un passage axial traversant destiné à recevoir à coulissement un obturateur 162 et une tige support associée 164 formant double clapet de surpression 160. Le cylindre 152 comprend également une pluralité d'orifices traversant radialement 158.

Les orifices 158 permettent un libre remplissage du volume interne du sélecteur 152 et l'évacuation du fluide lors de l'ouverture d'un clapet de surpression, comme on le verra par la suite.

Le cylindre 152 et les deux excroissances 154, 156 peuvent être formés d'une pièce unique venue de matière. Comme illustré sur les figures 8 à 11 l'une au moins des excroissances peut cependant être formée d'une pièce rapportée et fixée sur le cylindre 152 pour faciliter la réalisation et l'assemblage du dispositif.

Comme on le voit sur les figures 8 à 11, il est prévu sur une extrémité du cylindre 152 et sur la surface interne de celui-ci, une saillie annulaire 155 qui sert de siège à l'obturateur 162.

L'obturateur 162 est formé d'une excroissance sur une extrémité de la tige 164. L'obturateur 162 est placé en regard du siège 155, dans le volume de la chambre interne du cylindre 152.

Pour permettre l'assemblage de l'obturateur évasé 162 sur le siège 155, le cylindre 152 comporte de préférence un bouchon d'extrémité 159 vissé sur l'extrémité du cylindre 152 après mise en place de l'obturateur 162.

La tige 164 émerge axialement sur l'extrémité du sélecteur 150 opposée à l'obturateur 162. La tige 164 et son obturateur associé 162 sont sollicités vers une extrémité axiale du carter 120 par un ressort 170.

Ainsi, l'obturateur 162 est sollicité en appui contre le siège 155.

Le ressort 170 est intercalé sur la tige 164, entre l'excroissance 154 et une butée 172 en forme de bague portée par la tige 164.

De préférence, la butée 172, 192 est réglable en position sur la longueur de la tige 164 pour définir l'effort exercé par le ressort 170 et par conséquent le tarage de la pression d'ouverture du clapet de surpression.

La butée 172 peut être fixée en position sur la tige 164 par tout moyen approprié, par exemple par vissage ou sertissage ou soudure.

Comme indiqué précédemment les excroissances 154, 156 et le cylindre 152 sont avantageusement formés d'au moins deux pièces, de préférence de trois pièces, initialement séparées et assemblées par tout moyen approprié, par exemple par vissage ou sertissage ou soudure, comme on le voit sur les figures 8 à 11. Selon les figures 8 à 11 l'excroissance 154 est formée d'un élément initialement séparé du cylindre 152, mais adapté pour être rapporté et fixé sur celui-ci par tous moyens appropriés, par exemple par vissage.

Plus précisément encore le corps de sélecteur 152 comporte des passages traversant radialement 157 formés sur son extrémité axiale à l'extérieur du siège 155, entre le siège 155 et un segment d'étanchéité 166 porté par l'obturateur 162.

Par ailleurs l'extrémité axiale de l'obturateur 162 dirigée vers le siège 155 est de préférence en forme de tronc de cône 165. Plus précisément la surface en tronc de cône 165 comprend de préférence deux parties juxtaposées axialement 163 et 164 présentant des conicités différentes.

La partie 163 de cette surface en tronc de cône 165 repose sur le siège 155.

La partie 163 de cette surface tronconique 165 qui est accessible sur l'intérieur de la chambre interne du sélecteur 150 est soumise à la pression venant du passage 122. C'est cette partie 163 de surface tronconique 165 qui définit l'effort résultant de la pression du passage 122 permettant de vaincre l'effort du ressort 170 et donc d'ouvrir le clapet de surpression en cas de pression excessive sur le passage 122.

En revanche la partie 164 de la surface tronconique165 qui est disposée sur l'extérieur du siège 155 est soumise à la pression venant du passage 124 via les passages traversant précités 157. C'est cette partie 164 de surface tronconique 165 qui définit l'effort résultant de la pression du passage 124 permettant de vaincre l'effort du ressort 170 et donc d'ouvrir le clapet de surpression en cas de pression excessive sur le passage 124.

Comme on le voit sur les figures 8 à 11, la conicité des deux parties élémentaires 163 et 164 de la surface 165 peut être différente pour adapter les seuils d'ouverture du clapet sous l'effet des pressions respectivement du passage 122 et du passage 124.

Par ailleurs la partie évasée de l'obturateur 162 est guidée à translation selon l'axe O-O du dispositif dans une partie complémentaire du corps et possède à ce niveau un joint ou segment annulaire d'étanchéité 166.

L'étanchéité est assurée par la coopération entre la surface 163 et le siège 155 d'une part et entre le segment 166 et la surface cylindrique complémentaire qui l'entoure d'autre part. Ainsi par analogie avec la figure 7, l'équivalent de la surface S1 sur les figures 8 à 11 est délimité par le siège 155 et l'équivalent de la surface S2 sur les figures 8 à 11 est délimité entre le siège 155 et le segment d'étanchéité 166.

Comme on le voit à l'examen des figures 8 à 11, comme pour la figure 7 annexée, l'obturateur 162 possède deux surfaces situées de part et d'autre du siège associé 155 formé sur le cylindre 152 et soumises respectivement aux pressions venant des deux lignes d'alimentation 11 et 12.

Par ailleurs le dispositif comprend des moyens de confinement adaptés pour appliquer la pression du port 124 sur une zone localisée limitée de l'obturateur 162. Plus précisément ces moyens de confinement sont formés par le joint ou segment annulaire d'étanchéité 166 et par les canaux 157. Ainsi la pression qui règne dans la ligne d'alimentation associée au port 124 ne s'applique qu'à la face de l'obturateur 162 située à l'extérieur du siège 155, plus précisément à la surface délimitée entre le siège 155 et le segment 166.

Pour permettre un libre déplacement de l'obturateur 162 dans le logement formé par le bouchon 159 rapporté sur l'extrémité du cylindre 152, il est de préférence prévu des canaux longitudinaux 151 qui forment canal de purge et relient ce logement interne du sélecteur au port 126.

Le canal de purge 151 a une fonction équivalente à celle du canal 702 de la figure 7. Il permet le mouvement de l'obturateur 164, et a une fonction d'amortissement si la section du canal 151 est réduite. Cependant, le canal 151 illustré sur les figures 8 à 11 ne débouche pas au même endroit que le canal 702 de la figure 7. En effet selon les figures 8 à 11 le canal de purge 151 débouche dans le port de gavage 126, alors que selon la figure 7 le canal de purge 702 débouche dans le réservoir R.

Pour assembler le dispositif de limitation de pression précédemment décrit, on procède essentiellement comme suit.

Dans un premier temps, l'on assemble l'obturateur 162 et sa tige 164 équipés du ressort 170 et de la butée 172, sur le cylindre 152 de sélecteur dépourvu de l'excroissance 154, l'obturateur 162 étant placé en regard du siège 155. La butée 172 est réglée en position pour le tarage recherché. Le bouchon obturateur 159 est fixé sur le corps de sélecteur 152

Le sous-ensemble de clapet de surpression et sélecteur ainsi formé est introduit dans le carter 120, par l'extrémité de celui-ci opposée au bouchon 112. L'excroissance 154 est fixée sur le cylindre 152 du sélecteur.

A cette fin, la surface extérieure du cylindre 152 de sélecteur peut être munie de formes de préhension accessibles par les passages 126 pour faciliter l'assemblage.

Puis, le bouchon 112 est fixé sur l'extrémité du carter 120. Les joints d'étanchéité sont placés dans leurs gorges respectives.

Le dispositif illustré sur les figures 8 à 11, comme pour la figure 7, comprend en outre au moins deux guidages en translation de l'obturateur 162, séparés selon la direction longitudinale de translation O-O de celui-ci, d'une distance égale à au moins une fois le diamètre de l'obturateur 162 reposant sur le siège 155 associé, de préférence une distance égale à au moins deux fois ce diamètre et très avantageusement, comme illustré sur les figures 8 à 11 égale à au moins cinq fois ce diamètre.

Plus précisément encore comme illustré sur les figures 8 à 11, le dispositif comprend un premier guidage en translation de l'obturateur 162 formé par la coopération définie entre l'extrémité conique 163 de l'obturateur 162 et son siège associé 155 et au moins un deuxième guidage formé par la deuxième extrémité de la tige d'obturateur 164 guidée sur le corps au niveau de la collerette précitée 172 définissant l'appui du ressort 170. Ces deux guidages sont séparés typiquement d'une distance au moins égale à 5 fois le diamètre du siège 155.

Comme on le voit sur les figures 8 à 11, le dispositif comprend en outre un troisième guidage à translation de l'obturateur formé par la partie évasée 162 munie du joint 166 qui se déplace dans un canal de diamètre complémentaire formé sur le corps 152 de sélecteur.

Comme indiqué précédemment pour le premier mode de réalisation de la figure 7, un tel guidage multiple permet d'améliorer la fiabilité du dispositif par rapport aux dispositions proposées dans le document antérieur US 2005/0097887, sans pour autant pénaliser l'encombrement longitudinal cumulé des deux obturateurs du fait que selon l'invention les deux clapets de surpression sont regroupés sur des moyens communs.

L'on comprend que la tige 164 associée à l'obturateur 162 travaille à la traction sous la sollicitation du ressort 170.

Le fonctionnement du dispositif de limitation est essentiellement le suivant :
Au repos, en absence de pression sur le port 126 et donc dans la ligne de gavage 10 et par conséquent sur les ports 122, 124 et donc dans les lignes d'alimentation 11, 12, le sélecteur 150 est susceptible de libre déplacement dans le carter 120 en regard des sièges 132, 134. L'obturateur 162 sollicité par le ressort 170 repose sur le siège 155 et le clapet de surpression est par conséquent fermé.

En fonctionnement, lors de l'activation de la pompe de gavage 30 et d'un choix de sens de rotation de la machine M1 l'un des ports 122, 124 est soumis à une haute pression tandis que l'autre port 124, 122 est soumis à une basse pression de retour.

Le sélecteur 150 est ainsi sollicité par la haute pression.

Si comme illustré sur la figure 9, la haute pression est appliquée au port 124. L'excroissance 156 du sélecteur 150 est sollicitée en contact contre le siège 134. Le clapet de sélection correspondant est fermé. Inversement, une basse pression est appliquée au port 122. L'excroissance 154 du sélecteur 150 est séparée du siège 132. Le clapet de sélection correspondant est ouvert.

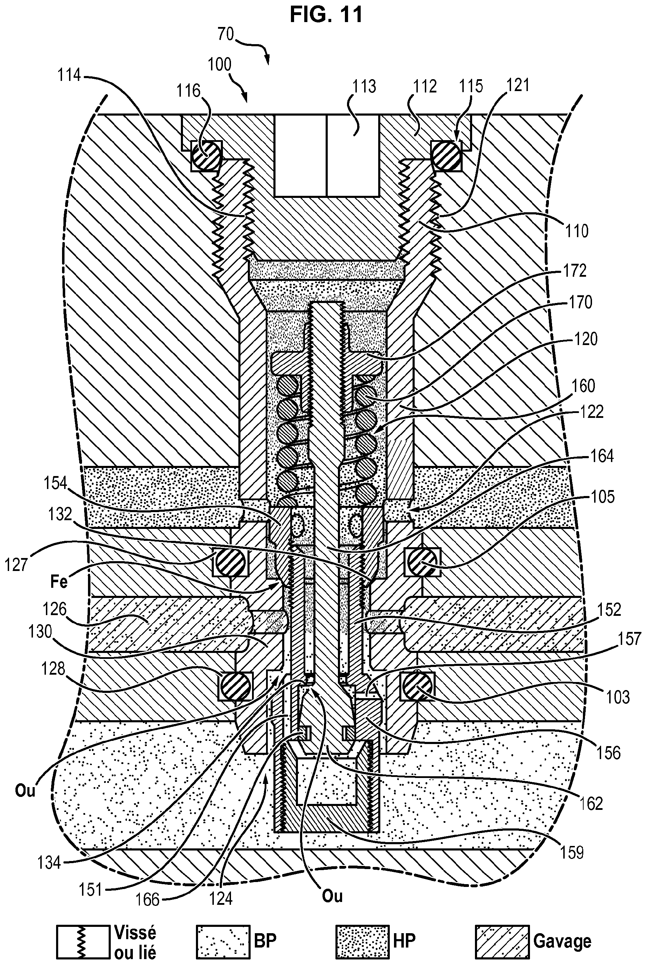

Comme on le voit sur la figure 11, en cas d'inversion du sens de rotation, la haute pression est appliquée au port 122. L'excroissance 154 du sélecteur 150 est sollicitée en contact contre le siège 132. Le clapet de sélection correspondant est fermé. Inversement, une basse pression est appliquée au port 124. L'excroissance 156 du sélecteur 150 est séparée du siège 134. Le clapet de sélection correspondant est ouvert.

Le fonctionnement du sélecteur est identique au moment de la mise en service ou de la mise hors service des machines hydrauliques, par l'utilisation de la pompe de gavage, dans le sens de faire entrer de l'huile dans la boucle fermée, ou de faire sortir de l'huile de la boucle fermée.

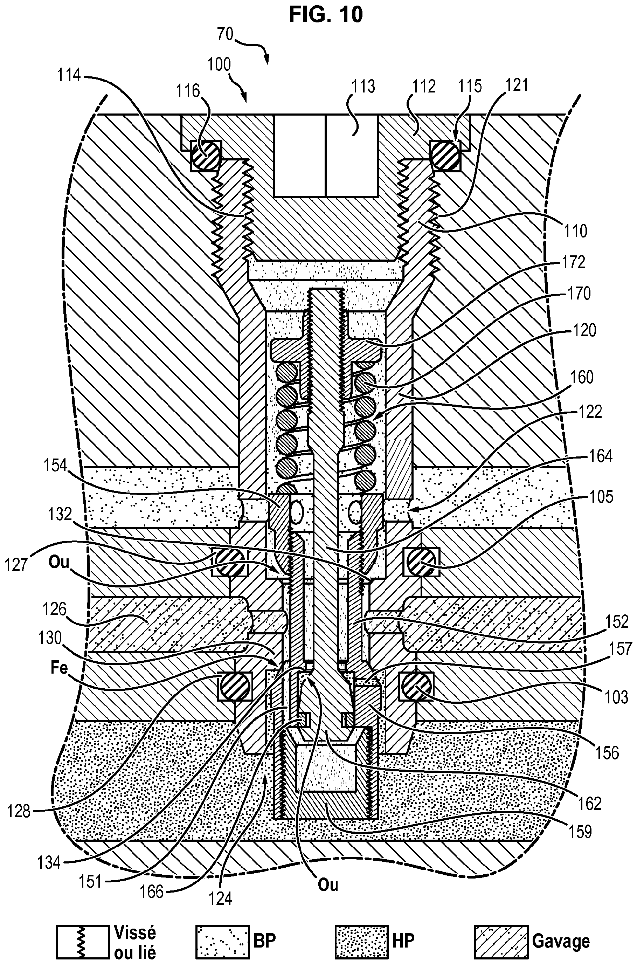

Lorsque la pression dans une ligne 11, 12 dépasse le seuil de tarage des clapets de surpression définis par le ressort 170, cette surpression appliquée à l'obturateur 162 assure l'ouverture du clapet de surpression, comme illustré sur les figures 10 et 11 par la séparation de l'obturateurs162 vis-à-vis du siège 155. La surpression correspondante est alors évacuée vers la ligne de gavage 10 ainsi que vers l'autre ligne d'alimentation. L'ouverture du clapet de surpression représentée sur la figure 10 est due à une surpression provenant de la ligne 124 et appliquée à la surface 163 située à l'extérieur du siège 155 via les passages 157. Celle représentée sur la figure 11 est due à une surpression provenant de la ligne 122 et appliquée à la surface 163 située à l'intérieur du siège 155.

Sur les figures 9 à 11 les clapets fermés sont répertoriés Fe tandis que les clapets ouverts sont répertoriés Ou.

L'homme de l'art comprendra que la réalisation conforme à l'invention permet d'intégrer l'ensemble des fonctions dans un composant en forme de cartouche tout en permettant un réglage simple et fiable, ainsi que de manière indépendante, du tarage de chaque clapet de surpression.

L'invention peut ainsi être intégrée ou juxtaposée à l'une des machines M1 M2.

Quel que soit le mode de réalisation, on obtient un dispositif dont l'engagement et le dégagement des machines M1, M2 est piloté uniquement par la pompe de gavage 30 et l'inversion de son sens de fonctionnement. Il n'est plus nécessaire de recourir à des valves pilotées électriquement.

Quel que soit l'aspect de l'invention, le désengagement des machines hydrauliques M1, M2 se fait grâce à la circulation en sens inverse du fonctionnement en gavage, du débit à travers la pompe, typiquement grâce à l'aspiration de la pompe de gavage 30. Cette circulation peut être passive ou active. Plusieurs types de pompes peuvent être utilisés.

Pour rappel, les figures précédentes représentent une pompe 30 entrainée par un moteur électrique 31 pouvant tourner dans les deux sens, mais cela n'est nullement limitatif.

En variante, la pompe de gavage peut être une pompe à cylindrée variable. Il n'est alors plus nécessaire d'avoir un limiteur de pression en parallèle de la pompe de gavage. Ce type de pompe connu réalise un asservissement de la cylindrée de la pompe vis-à-vis d'une consigne en pression, via une ligne de retro action et un ressort taré. Ce type de pompe équivaut à la juxtaposition d'une pompe a cylindrée fixe et d'un limiteur de pression.

La pompe de gavage peut aussi être une pompe à inversion de cylindrée. Une telle pompe tourne toujours dans le même sens mais un changement de cylindrée vers une cylindrée négative provoque l'aspiration.

La pompe à inversion de cylindrée précitée peut être entrainée par un essieu du véhicule (avec si besoin un réducteur et un coupleur, par exemple du type embrayage a disques).

### Les machine hydrauliques M1, M2

Les machines hydrauliques M1, M2 sont préférentiellement des machines à pistons radiaux, par exemple tel que schématisé sur la figure 12, comprenant :
- une came lobée 1,
- une pluralité de pistons 2 disposés radialement dans un bloc cylindres 3, les pistons 2 comprenant chacun un galet 4 pouvant rouler sur la came lobée 1,
- un arbre 5, pouvant être solidaire du bloc-cylindre lorsque notamment les coupleurs E1, E2 sont enclenchés.

Ces machines convertissent une énergie hydraulique en énergie mécanique grâce à la variation de cylindrée des pistons lorsqu'ils suivent la came lobée.

De telles machines M1, M2 possèdent des vitesses de rotation relativement faibles mais possèdent un couple élevé.

De telles machines M1 et M2 sont de préférence placées dans un véhicule de manière à tourner à la vitesse des roues qu'elles doivent entrainer, sans surmultiplication ou démultiplication. S'il y a une machine par essieu, cela s'entend à la vitesse moyenne des deux roues de l'essieu, via un différentiel ou un système équivalent.

Un carter (non représenté) protège l'ensemble. Le carter peut faire office de réservoir R. Le réservoir R est sensiblement à la pression atmosphérique. Il peut y être raccordé via des reniflards, des filtres, ou des clapets, ce qui peut créer une très légère différence de pression par rapport à l'extérieur.

Bien entendu la présente invention n'est pas limitée aux modes de réalisation qui viennent d'être décrit, mais s'étend à toutes variantes conformes à son esprit.

Selon d'autres caractéristiques avantageuses de l'invention :
- Le circuit d'assistance hydraulique conforme à l'invention comprend :
   - un premier appareil hydraulique et un deuxième appareil hydraulique, les deux moteurs étant reliés par une première ligne et une deuxième ligne permettant l'admission ou le refoulement d'huile dans lesdits moteurs,
- une pompe de gavage, disposée entre un réservoir et une ligne de gavage, la ligne de gavage étant en communication avec au moins une desdites lignes et pouvant permettre le gavage desdites lignes par la pompe de gavage,
et la pompe est configurée pour pouvoir aspirer de l'huile dans la ligne de gavage afin de permettre la décompression desdites première et deuxième lignes.

Grâce à l'activation de la pompe en aspiration dans le circuit de gavage, on améliore la deuxième phase transitoire en accélérant la mise à vide des première et deuxième lignes. La circulation en sens inverse du fonctionnement en gavage, du débit à travers la pompe, peut être passive (extinction de la pompe et décompression des lignes) ou active (pilotage de la pompe).

Par ailleurs on a décrit précédemment le dispositif conforme à la présente invention sous forme d'une cartouche autonome adaptée pour être fixée, par exemple par vissage, dans un logement complémentaire formé dans un corps support.

En variante, comme illustré sur la figure 13 cependant on peut omettre le corps de cartouche et disposer directement les éléments constituant le sélecteur 150 et les clapets de surpression 160 dans le bloc du corps support usiné sous réserve de ménager les mêmes formes et les mêmes fonctions sur ce bloc de corps support. Dans le cas où le bloc de corps support comporte ainsi un rétrécissement 130 définissant les deux sièges 132, 134, il est nécessaire pour le montage de ménager un accès des deux côtés de ce rétrécissement. Il est alors nécessaire de prévoir deux bouchons d'obturation de ces accès comme illustré sur la figure 13 sous les références 112a et 112b. Une telle disposition facilite l'installation et le réglage.

La fermeture du logement qui reçoit le sélecteur 72, 150 et le clapet de limitation de surpression 71, 160, avec un bouchon amovible 112 permet un réglage simple de la pression seuil d'ouverture des clapets de surpression. Il suffit en effet de retirer le bouchon 112 pour accéder aux éléments de réglage du ou des ressort(s) 70, régler ceux-ci, puis remettre le bouchon 112 en place.

## Revendications

1. Dispositif distributeur et limiteur de pression adapté pour être installé dans un système comprenant une première ligne (11) et une deuxième ligne (12) d'alimentation pouvant comprendre de l'huile sous pression et comprenant une ligne d'évacuation et/ou gavage (10), le dispositif comprenant des moyens formant sélecteur de pression (72, 150) adapté pour relier la ligne d'alimentation de plus basse pression à la ligne d'évacuation et/ou gavage et des limiteurs de pressions (71) formant deux clapets associés respectivement à l'une des deux lignes d'alimentation (11, 12) et adaptés pour s'ouvrir en cas de surpression au-dessus d'un seuil prédéterminé sur la ligne d'alimentation associée afin de décharger la surpression correspondante vers la ligne d'évacuation et/ou gavage (10) ou l'autre ligne d'alimentation, le sélecteur de pression (72) et les limiteurs de pression (71) étant formés par une seule valve (70), le dispositif étant **caractérisé en ce que** les deux clapets comprennent un obturateur commun (162) qui coopère avec un siège unique (155.

2. Dispositif selon la revendication 1, **caractérisé en ce que** les deux clapets limiteur de pression (71, 160) comprenant un obturateur commun (711a, 162) qui coopère avec un siège unique (155) comprennent une tige support commune (711, 164) qui travaille à la traction ou à la compression sous la sollicitation d'au moins un ressort (712, 170) définissant un tarage qui correspond audit seuil prédéterminé.

3. Dispositif selon l'une des revendications 1 ou 2, **caractérisé en ce que** l'obturateur (711, 162) possède au moins deux surfaces (S1, S2) situées de part et d'autre du siège associé (155) et soumises respectivement aux pressions venant des deux lignes d'alimentation (11, 12).

4. Dispositif selon l'une des revendications 1 à 3, **caractérisé en ce qu'**il comprend deux guidages en translation de l'obturateur (711, 162), séparés selon la direction longitudinale de translation de celui-ci, d'une distance égale à au moins une fois le diamètre de l'obturateur reposant sur le siège associé (155), de préférence une distance égale à au moins deux fois ce diamètre et très avantageusement égale à au moins cinq fois ce diamètre.

5. Dispositif selon l'une des revendications 1 à 4, dans lequel le sélecteur de pression (72), lorsque positionné entre les première et deuxième lignes (11, 12) est adapté pour sélectionner la ligne de plus basse pression entre les première et deuxième lignes (11 ,12), de sorte que l'huile puisse circuler en sens inverse du fonctionnement en gavage et se décompresser dans le réservoir à travers la ligne de gavage et la pompe de gavage, avantageusement aspirée dans la ligne de plus basse pression et refoulée vers le réservoir (R) grâce à ladite pompe (30).

6. Dispositif selon l'une des revendications 1 à 5, dans lequelladite valve formant le sélecteur de pression (72) et les limiteurs de pression (71) comprend une cartouche (701, 120) dans laquelle peuvent coulisser en position relative un poussoir (721) et un pion (711) selon l'axe longitudinal X-X' de la valve (70), dans lequel :
- le poussoir (721) sépare la cartouche (701) en un premier volume (V1) alimenté par la première ligne (11) et en un second volume (V2) alimenté par la deuxième ligne (12), les deux volumes (V1, V2) pouvant communiquer entre eux par un canal interne (722) compris dans le poussoir,
- le poussoir (721) définit un volume annulaire (Va) avec la cartouche (701), le volume annulaire (Va) communiquant alternativement avec le premier ou le second volume (V1, V2) selon la position en translation du poussoir (721) dans la cartouche (701) selon l'axe longitudinal (X-X'),
- le pion (711) comprend une première extrémité (711a) adaptée pour obstruer ledit canal (722) dans une position de repos, et une deuxième extrémité (711b) au contact d'un ressort (712) qui maintient le pion (711) en position de repos, le pion (711) étant mobile en translation selon l'axe longitudinal (X-X') pour ouvrir ou obturer le canal interne (722),
de sorte que lorsque le canal est obstrué, la position du poussoir (721) est fonction des forces issues des pressions du premier volume (V1) et du deuxième volume (V2) s'exerçant de part et d'autre du poussoir (721), et la ligne de gavage (10) est ainsi mise en communication avec la ligne (11, 12) qui a la plus basse pression parmi les première et deuxième lignes (11, 12),
- le pion (711) comprend une première surface (S1) débouchant dans le premier volume (V1) sur laquelle s'exerce une force issue de la pression du premier volume (V1), et une deuxième surface (S2) débouchant dans la second volume (V2)) sur laquelle s'exerce une force issue de la pression du second volume (V2), les deux forces s'opposant toutes deux à la force du ressort (712),
de sorte que lorsque les deux forces sont supérieures à celle du ressort (712), le pion (711) subit une translation et ouvre ledit canal (722), mettant ainsi en communication les lignes haute et basse pression (11, 12).

7. Dispositif selon l'une des revendications 1 à 6, **caractérisé par le fait qu'**il comprend un ressort de tarage unique (170) pour le limiteur de pression.

8. Dispositif selon l'une des revendications 1 à 7, dans lequel le sélecteur de pression (150) est en forme de cage définissant deux sièges (132, 134), **caractérisé en ce que** le dispositif comprend en outre au moins un moyen de réglage (170) des moyens formant clapet de surpression, disposé sur l'extérieur d'une extrémité axiale du sélecteur de pression (150) en forme de cage pour permettre un réglage du tarage du clapet de surpression associé.

9. Dispositif selon l'une des revendications 1 à 8, **caractérisé en ce que** les moyens formant deux clapets de surpression (160) comprennent un obturateur unique (162) formé d'une excroissance sur une extrémité d'une tige (164), la tige (164) émergeant axialement sur une extrémité du sélecteur (152) et la tige (164) et son obturateur associé (162) sont sollicités vers une extrémité axiale du dispositif par un ressort (170) intercalé sur la tige (164), entre une excroissance (154) formant obturateur et une butée (172) portée par la tige (164).

10. Dispositif selon la revendication 9, **caractérisé en ce que** la butée (172) est réglable en position sur la longueur de la tige associée (164) pour définir l'effort exercé par le ressort (170) et par conséquent le tarage de la pression d'ouverture des moyens formant clapet de surpression.

11. Dispositif selon l'une des revendications 1 à 10, **caractérisé en ce que** le sélecteur (150) comprend un diabolo formé d'un cylindre central (152) pourvu sur ses deux extrémités axiales d'excroissances respectives (154, 156) en saillie sur sa surface externe et sur sa surface interne d'une saillie (155) définissant un siège (155) de clapet de surpression (160), le cylindre (152) et les excroissances étant formées d'au moins deux pièces initialement séparées et assemblées entre elles.

12. Dispositif selon l'une des revendications 1 à 11, **caractérisé en ce que** l'extrémité axiale de l'obturateur (162) dirigée vers le siège (155) associé est en forme de tronc de cône (165),
dans lequel la surface en tronc de cône (165) repose sur le siège (155) et
dans lequel une partie (163) de la surface tronconique (165) qui est accessible sur l'intérieur de la chambre interne du sélecteur (150) est soumise à la pression venant d'un premier passage (122), tandis que la partie (164) de la surface tronconique (165) qui est disposée sur l'extérieur du siège (155) est soumise à la pression venant d'un deuxième passage (124) via des passages (157) traversant le corps de sélecteur.

13. Dispositif selon l'une quelconque des revendications 1 à 12, comprenant dans un boitier de cartouche commun le sélecteur et le limiteur de pression.

14. Système d'assistance hydraulique **caractérisé en ce qu'**il comprend :
- un dispositif de distribution et de limitation conforme à l'une des revendications précédentes,
- un premier appareil hydraulique (M1) et un deuxième appareil hydraulique (M2), les deux appareils (M1, M2) étant reliés par une première ligne (11) et une deuxième ligne (12) permettant l'admission ou le refoulement d'huile dans lesdits moteurs (M1, M2),
- une pompe de gavage (30, 32, 33), disposée entre un réservoir (R) et une ligne de gavage (10), la ligne de gavage (10) étant en communication avec au moins une desdites lignes (11, 12) et pouvant permettre le gavage desdites lignes (11, 12) par la pompe de gavage (30),
**caractérisé en ce que** la pompe (30, 32, 33) est configurée pour pouvoir aspirer de l'huile dans la ligne de gavage (10) afin de permettre la décompression desdites première et deuxième lignes (11, 12).

15. Véhicule équipé d'un dispositif de limitation de pression conforme à l'une des revendications 1 à 13 et/ou un système d'assistance hydraulique conforme à la revendication 14.

## Patentansprüche

1. Verteiler- und Druckbegrenzervorrichtung, die geeignet ist, in einem System installiert zu sein, die eine erste Versorgungsleitung (11) und eine zweite Versorgungsleitung (12) umfasst, die Öl unter Druck umfassen können und umfassend eine Ableitungs- und/oder Zufuhrleitung (10), wobei die Vorrichtung Mittel umfasst, die einen Druckwähler (72, 150) bilden, der geeignet ist, die Versorgungsleitung mit dem niedrigsten Druck mit der Ableitungs- und/oder Zufuhrleitung zu verbinden und Druckbegrenzer (71), die zwei Klappenventile bilden, die jeweils einer der zwei Versorgungsleitungen (11, 12) zugeordnet und geeignet sind, sich bei Überdruck über einem vorgestimmten Grenzwert in der zugeordneten Versorgungsleitung zu öffnen, um den entsprechenden Überdruck zu der Ableitungs- und/oder Zufuhrleitung (10) oder der anderen Versorgungsleitung abzuleiten, wobei der Druckwähler (72) und die Druckbegrenzer (71) von einem einzigen Ventil (70) gebildet sind, wobei die Vorrichtung **dadurch gekennzeichnet ist, dass** die zwei Klappenventile einen gemeinsamen Verschluss (162) umfassen, der mit einem einzigen Sitz (155) zusammenwirkt.

2. Vorrichtung nach Anspruch 1, **dadurch gekennzeichnet, dass** die zwei Druckbegrenzer-Klappenventile (71, 160), die einen gemeinsamen Verschluss (711a, 162) umfassen, der mit einem einzigen Sitz (155) zusammenwirkt, eine gemeinsame Stützstange (711, 164) umfassen, die unter der Wirkung von mindestens einer Feder (712, 170), die eine Vorspannung definiert, die dem vorbestimmten Grenzwert entspricht, durch Zug oder Kompression arbeitet.

3. Vorrichtung nach einem der Ansprüche 1 oder 2, **dadurch gekennzeichnet, dass** der Verschluss (711, 162) mindestens zwei Flächen (S1, S2) besitzt, die sich beiderseits des zugeordneten Sitzes (155) befinden und jeweils den Drücken ausgesetzt sind, die von den zwei Versorgungsleitungen (11, 12) kommen.

4. Vorrichtung nach einem der Ansprüche 1 bis 3, **dadurch gekennzeichnet, dass** sie zwei translatorische Führungen des Verschlusses (711, 162) umfasst, die gemäß der Translations-Längsrichtung desselben in einem Abstand getrennt sind, der mindestens einmal dem Durchmesser des Verschlusses entspricht, der auf dem zugeordneten Sitz (155) ruht, vorzugsweise einem Abstand, der mindestens zweimal diesem Durchmesser und in sehr vorteilhafter Weise mindestens fünfmal diesem Durchmesser entspricht.

5. Vorrichtung nach einem der Ansprüche 1 bis 4, wobei der Druckwähler (72), wenn zwischen der ersten und zweiten Leitung (11, 12) positioniert, geeignet ist, die Leitung mit dem niedrigsten Druck aus der ersten und zweiten Leitung (11, 12) auszuwählen, so dass das Öl, in vorteilhafter Weise in der Leitung mit dem niedrigsten Druck angesaugt und dank der Pumpe (30) zum Vorratsbehälter (R) befördert, in umgekehrter Richtung zum Zufuhrbetrieb zirkulieren und sich im Vorratsbehälter über die Zufuhrleitung und die Zufuhrpumpe entspannen kann.

6. Vorrichtung nach einem der Ansprüche 1 bis 5, wobei das Ventil, das den Druckwähler (72) und die Druckbegrenzer (71) bildet, eine Kartusche (701, 120) umfasst, in der in relativer Position ein Drücker (721) und ein Stift (711) gemäß der Längsachse X-X' des Ventils (70) gleiten können, wobei:
- der Drücker (721) die Kartusche (701) in ein erste Volumen (V1) trennt, das von der ersten Leitung (11) versorgt wird, und in ein zweites Volumen (V2), das von der zweiten Leitung (12) versorgt wird, wobei die zwei Volumen (V1, V2) über einen inneren Kanal (722) miteinander kommunizieren können, der in dem Drücker inbegriffen ist,
- der Drücker (721) mit der Kartusche (701) ein ringförmiges Volumen (Va) definiert, wobei das ringförmige Volumen (Va) abwechselnd mit dem ersten oder dem zweiten Volumen (V1, V2) je nach Translationsposition des Drückers (721) in der Kartusche (701) gemäß der Längsachse (X-X') kommuniziert,
- der Stift (711) ein erstes Ende (711a) umfasst, das geeignet ist, in einer Ruheposition den Kanal (722) zu verschließen, und ein zweites Ende (711b) im Kontakt mit einer Feder (712), die den Stift (711) in Ruheposition hält, wobei der Stift (711) gemäß der Längsachse (X-X') translatorisch beweglich ist, um den inneren Kanal (722) zu öffnen oder zu verschließen,
so dass, wenn der Kanal verschlossen ist, die Position des Drückers (721) von den Kräften abhängt, die von den Drücken des ersten Volumens (V1) und des zweiten Volumens (V2) ausgehen, die beiderseits des Drückers (721) wirken, und die Zufuhrleitung (10) somit mit der Leitung (11, 12) von der ersten und zweiten Leitung (11, 12) in Kommunikation versetzt wird, die den niedrigsten Druck hat,
- der Stift (711) eine erste Fläche (S1) umfasst, die in das erste Volumen (V1) ausmündet, auf die eine Kraft wirkt, die vom Druck des ersten Volumens (V1) ausgeht, und eine zweite Fläche (S2), die in das zweite Volumen (V2) ausmündet, auf die eine Kraft wirkt, die vom Druck des zweiten Volumens (V2) ausgeht, wobei die zwei Kräfte beide der Kraft der Feder (712) entgegenwirken,
so dass, wenn die zwei Kräfte größer sind als die der Feder (712), der Stift (711) einer Translation unterzogen wird und den Kanal (722) öffnet, wodurch die Hoch- und Niederdruckleitung (11, 12) in Kommunikation versetzt werden.

7. Vorrichtung nach einem der Ansprüche 1 bis 6, **dadurch gekennzeichnet, dass** sie eine einzige Eichfeder (170) für den Druckbegrenzer umfasst.

8. Vorrichtung nach einem der Ansprüche 1 bis 7, wobei der Druckwähler (150) in Käfigform ist, wobei zwei Sitze (132, 134) definiert werden, **dadurch gekennzeichnet, dass** die Vorrichtung ferner ein Einstellmittel (170) der Mittel umfasst, die das Überdruckklappenventil bilden, das auf dem Äußeren eines axialen Endes des Druckwählers (150) in Käfigform angeordnet ist, um eine Einstellung der Vorspannung des zugeordneten Überdruckklappenventils zu erlauben.

9. Vorrichtung nach einem der Ansprüche 1 bis 8, **dadurch gekennzeichnet, dass** die Mittel, die zwei Überdruckklappenventile (160) bilden, einen einzigen Verschluss (162) umfassen, der von einem Vorsprung auf einem Ende einer Stange (164) gebildet ist, wobei die Stange (164) axial über einem Ende des Wählers (152) auftaucht und die Stange (164) und ihr zugeordneter Verschluss (162) zu einem axialen Ende der Vorrichtung von einer Feder (170) betätigt werden, die auf der Stange (164) zwischen einem Vorsprung (154), der einen Verschluss bildet, und einem von der Stange (164) getragenen Anschlag (172) angeordnet ist.

10. Vorrichtung nach Anspruch 9, **dadurch gekennzeichnet, dass** die Position des Anschlags (172) über die Länge der zugeordneten Stange (164) einstellbar ist, um die von der Feder (170) ausgeübte Kraft und folglich die Vorspannung des Öffnungsdrucks der Mittel zu definieren, die das Überdruckklappenventil bilden.

11. Vorrichtung nach einem der Ansprüche 1 bis 10, **dadurch gekennzeichnet, dass** der Wähler (150) einen Diabolo umfasst, der von einem zentralen Zylinder (152) gebildet ist, der an seinen beiden axialen Enden mit jeweiligen Vorsprüngen (154, 156) versehen ist, die über seine äußere Fläche hervorstehen, und an seiner innere Fläche mit einem Vorsprung (155), der einen Sitz (155) eines Überdruckklappenventils (160) definiert, wobei der Zylinder (152) und die Vorsprünge von mindestens zwei ursprünglich getrennten und miteinander verbundenen Teilen gebildet sind.

12. Vorrichtung nach einem der Ansprüche 1 bis 11, **dadurch gekennzeichnet, dass** das axiale Ende des Verschlusses (162), das zum zugeordneten Sitz (155) zeigt, kegelstumpfförmig (165) ist,
wobei die kegelstumpfförmige Fläche (165) auf dem Sitz (155) ruht und
wobei ein Teil (163) der kegelstumpfförmigen Fläche (165), der über das Innere der inneren Kammer des Wählers (150) erreichbar ist, dem Druck unterliegt, der von einem ersten Durchgang (122) kommt, wohingegen der Teil (164) der kegelstumpfförmigen Fläche (165), der auf dem Äußeren des Sitzes (155) angeordnet ist, dem Druck unterliegt, der von einem zweiten Durchgang (124) über Durchgänge (157) kommt, die den Wählerkörper durchqueren.

13. Vorrichtung nach einem der Ansprüche 1 bis 12, die in einem gemeinsamen Kartuschengehäuse den Wähler und den Druckbegrenzer umfasst.

14. Hydraulisches Assistenzsystem, **dadurch gekennzeichnet, dass** es umfasst:
- eine Verteiler- und Begrenzervorrichtung nach einem der vorangehenden Ansprüche,
- eine erste hydraulische Apparatur (M1) und eine zweite hydraulische Apparatur (M2), wobei die zwei Apparaturen (M1, M2) durch eine erste Leitung (11) und eine zweite Leitung (12) verbunden sind, die die Aufnahme oder die Abgabe von Öl in die Motoren (M1, M2) gestatten,
- eine Zufuhrpumpe (30, 32, 33), die zwischen einem Vorratsbehälter (R) einer Zufuhrleitung (10) angeordnet ist, wobei die Zufuhrleitung (10) mit mindestens einer der Leitungen (11, 12) in Kommunikation ist und die Versorgung der Leitungen (11, 12) durch die Zufuhrpumpe (30) gestatten kann,
**dadurch gekennzeichnet, dass** die Pumpe (30, 32, 33) ausgelegt ist, um Öl aus der Zufuhrleitung (10) absaugen zu können, um die Dekompression der ersten und zweiten Leitung (11, 12) zu erlauben.

15. Fahrzeug, ausgestattet mit einer Druckbegrenzervorrichtung nach einem der Ansprüche 1 bis 13 und/oder einem hydraulischen Assistenzsystem nach Anspruch 14.

## Claims

1. A pressure distributing and limiting device adapted to be installed in a system comprising a first (11) and a second (12) supply line which can comprise pressurized oil and comprising an evacuation and/or booster line (10), the device comprising means forming a pressure selector (72, 150) adapted to connect the lower pressure supply line to the evacuation and/or booster line and pressure limiters (71) forming two valves associated respectively with one of the two supply lines (11, 12) and adapted to open in the event of overpressure above a predetermined threshold on the associated supply line in order to discharge the corresponding overpressure towards the evacuation and/or booster line (10) or the other supply line, the pressure selector (72) and the pressure limiters (71) being formed by a single valve (70), the device being **characterized in that** the two valves comprise a common shutter (162) that cooperates with a single seat (155).

2. The device according to claim 1, **characterized in that** the two pressure limiting valves (71, 160) comprising a common shutter (711a, 162) that cooperates with a single seat (155) comprise a common support rod (711, 164) which works in traction or in compression under the bias of at least one spring (712, 170) defining a setting which corresponds to said predetermined threshold.

3. The device according to any of claims 1 or 2, **characterized in that** the shutter (711, 162) has at least two surfaces (S1, S2) located on either side of the associated seat (155) and subject respectively to the pressures coming from the two supply lines (11, 12).

4. The device according to any of claims 1 to 3, **characterized in that** it comprises two translational guides for the shutter (711, 162), separated along the longitudinal direction of translation thereof, by a distance equal to at least once the diameter of the shutter resting on the associated seat (155), preferably a distance equal to at least twice this diameter and very advantageously equal to at least five times this diameter.

5. The device according to any of claims 1 to 4, wherein the pressure selector (72), when positioned between the first and second lines (11, 12) is adapted to select the lower pressure line between the first and second lines (11, 12), so that the oil can circulate in the opposite direction to the booster operation and decompress in the tank through the booster line and the booster pump, advantageously sucked into the lower pressure line and delivered toward the tank (R) by means of said pump (30) .

6. The device according to any of claims 1 to 5, wherein said valve forming the pressure selector (72) and the pressure limiters (71) comprises a cartridge (701, 120) in which a pusher (721) and a pin (711) can slide in relative position along the longitudinal axis X-X' of the valve (70), wherein:
- the pusher (721) separates the cartridge (701) into a first volume (V1) supplied by the first line (11) and into a second volume (V2) supplied by the second line (12), the two volumes (V1, V2) being able to communicate with each other through an internal channel (722) comprised in the pusher,
- the pusher (721) defines an annular volume (Va) with the cartridge (701), the annular volume (Va) communicating alternatively with the first or the second volume (V1, V2) according to the translational position of the pusher (721) in the cartridge (701) along the longitudinal axis (X-X'),
- the pin (711) comprises a first end (711a) adapted to obstruct said channel (722) in a rest position, and a second end (711b) in contact with a spring (712) which maintains the pin (711) in the rest position, the pin (711) being movable in translation along the longitudinal axis (X-X') to open or close off the internal channel (722),
so that when the channel is obstructed, the position of the pusher (721) is a function of the forces derived from the pressures of the first volume (V1) and of the second volume (V2) exerted on either side of the pusher (721), and the booster line (10) is thus placed in communication with the line (11, 12) which has the lowest pressure among the first and second lines (11, 12),
- the pin (711) comprises a first surface (S1) opening out into the first volume (V1) on which a force derived from the pressure of the first volume (V1) is exerted, and a second surface (S2) opening out into the second volume (V2) on which a force derived from the pressure of the second volume (V2) is exerted, the two forces both counteracting the force of the spring (712),
so that when the two forces are greater than that of the spring (712), the pin (711) undergoes a translation and opens said channel (722), thus putting in communication the high and low pressure lines (11, 12) .

7. The device according to any of claims 1 to 6, **characterized by** the fact that it comprises a single setting spring (170) for the pressure limiter.

8. The device according to any of claims 1 to 7, wherein the pressure selector (150) has the shape of a cage defining two seats (132, 134), **characterized in that** the device further comprises at least one means for adjusting (170) the means forming an overpressure valve, disposed on the outside of an axial end of the cage-shaped pressure selector (150) to allow an adjustment of the setting of the associated overpressure valve.

9. The device according to any of claims 1 to 8, **characterized in that** the means forming two overpressure valves (160) comprise a single shutter (162) formed by a protrusion on one end of a rod (164), the rod (164) emerging axially on one end of the selector (152) and the rod (164) and its associated shutter (162) are biased towards an axial end of the device by a spring (170) interposed on the rod (164), between a protrusion (154) forming a shutter and an abutment (172) carried by the rod (164).

10. The device according to claim 9, **characterized in that** the abutment (172) is adjustable in position over the length of the associated rod (164) to define the force exerted by the spring (170) and consequently the setting of the opening pressure of the means forming an overpressure valve.

11. The device according to any of claims 1 to 10, **characterized in that** the selector (150) comprises a diabolo formed of a central cylinder (152) provided on its two axial ends with respective protrusions (154, 156) projecting on its outer surface and on its inner surface of a projection (155) defining an overpressure (160) valve seat (155), the cylinder (152) and the protrusions being formed of at least two parts initially separated and assembled together.

12. The device according to any of claims 1 to 11, **characterized in that** the axial end of the shutter (162) directed toward the associated seat (155) has a truncated cone shape (165),
wherein the truncated-cone-shaped surface (165) rests on the seat (155) and
wherein a portion (163) of the truncated-cone-shaped surface (165) which is accessible on the inside of the inner chamber of the selector (150) is subjected to the pressure coming from a first passage (122), while the portion (164) of the truncated-cone-shaped surface (165) which is disposed on the outside of the seat (155) is subjected to the pressure coming from a second passage (124) via passages (157) passing through the selector body.

13. The device according to any one of claims 1 to 12, comprising in a common cartridge casing the selector and the pressure limiter.

14. A hydraulic assistance system **characterized in that** it comprises:
- a distribution and limitation device according to any of the preceding claims,
- a first hydraulic apparatus (M1) and a second hydraulic apparatus (M2), the two apparatuses (M1, M2) being connected by a first line (11) and a second line (12) allowing the admission or the delivery of oil in said engines (M1, M2),
- a booster pump (30, 32, 33), disposed between a tank (R) and a booster line (10), the booster line (10) being in communication with at least one of said lines (11, 12) and being able to allow the booster of said lines (11, 12) by the booster pump (30),
**characterized in that** the pump (30, 32, 33) is configured to be able to suck oil into the booster line (10) in order to allow the decompression of said first and second lines (11, 12).

15. A vehicle equipped with a pressure limiting device according to any of claims 1 to 13 and/or a hydraulic assistance system according to claim 14.
